(19) Europäisches Patentamt / European Patent Office / Office européen des brevets

(11) **EP 4 429 153 A1**

(12) **EUROPEAN PATENT APPLICATION**
published in accordance with Art. 153(4) EPC

(43) Date of publication:
**11.09.2024 Bulletin 2024/37**

(21) Application number: **22889436.6**

(22) Date of filing: **04.11.2022**

(51) International Patent Classification (IPC):
**H04L 5/00** *(2006.01)*

(52) Cooperative Patent Classification (CPC):
**H04L 5/00; H04W 68/00;** Y02D 30/70

(86) International application number:
**PCT/CN2022/129964**

(87) International publication number:
**WO 2023/078415 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.11.2021 CN 202111310549**

(71) Applicant: **Spreadtrum Communications (Shanghai) Co., Ltd.**
**Shanghai 201203 (CN)**

(72) Inventors:
• ZHOU, Huayu
  Shanghai 201203 (CN)
• LEI, Zhenzhu
  Shanghai 201203 (CN)
• WANG, Miao
  Shanghai 201203 (CN)
• PAN, Zhengang
  Shanghai 201203 (CN)

(74) Representative: **Mewburn Ellis LLP**
**Aurora Building**
**Counterslip**
**Bristol BS1 6BX (GB)**

(54) **PAGING EARLY INDICATION METHOD AND APPARATUS, AND TERMINAL**

(57) A method and an apparatus for a paging early indication (PEI) are disclosed in the disclosure. The method includes determining a location of a PEI occasion (PEI-O). Therefore, the location of the PEI-O is determined to implement design of a PEI.

DETERMINE A LOCATION OF A PEI-O — S210

FIG. 2

EP 4 429 153 A1

**Description**

TECHNICAL FIELD

The disclosure relates to the field of communication technology, and in particular, to a method and an apparatus for a paging early indication (PEI), and a terminal.

BACKGROUND

In a radio resource control (RRC) idle (RRC_IDLE) state or an RRC inactive (RRC_INACTIVE) state, a terminal needs to monitor a paging-related physical downlink control channel (PDCCH), which is also referred to as a type 2-PDCCH.

After the paging-related PDCCH is detected by the terminal, the terminal may parse DCI. The DCI may contain a short message, so that the terminal can obtain alarm information or update system information. In addition, the DCI may also contain scheduling information, so that the terminal can receive a paging-related physical downlink shared channel (PDSCH), thereby obtaining a paging message. Furthermore, the terminal can initiate random access to enter a connected (RRC_CONNECTED) state.

A paging occasion (PO) may represent a time-domain location of a paging-related PDCCH and may consist of multiple paging-related PDCCH monitoring occasions. The paging-related PDCCH monitoring occasion may also be referred to as a PDCCH monitoring occasion (PMO). Therefore, one PO may contain multiple PMOs.

In a process of monitoring the paging-related PDCCH, in order to avoid unnecessary monitoring and save power consumption of the terminal, in the RRC_IDLE state or the RRC_INACTIVE state, a network device may configure a paging early indication (PEI), where the PEI may indicate whether the terminal needs to continue to monitor the paging-related PDCCH, thereby achieving a purpose of saving power consumption.

With the continuous evolution of standard protocols specified by 3rd generation partnership project (3GPP), the current PEI needs to be further designed.

SUMMARY

In a first aspect, a method for a paging early indication (PEI) is provided in embodiments of the disclosure. The method includes determining a location of a PEI occasion (PEI-O).

As can be seen, the location of the PEI-O is determined to implement design of the PEI.

In a second aspect, a method for a PEI is provided in embodiments of the disclosure. The method includes: determining that a PEI-O corresponds to a paging occasion (PO) in a paging frame (PF) or determining that the PEI-O corresponds to POs in multiple PFs.

As can be seen, the case that the PEI-O corresponds to the PO in the PF or the PEI-O corresponds to the POs in the multiple PFs is determined to implement design of the PEI.

In a third aspect, a method for a PEI is provided in embodiments of the disclosure. The method includes determining a number of bits of a PEI physical downlink control channel (PDCCH).

As can be seen, the number of the bits of the PEI PDCCH is determined to implement design of the PEI.

In a fourth aspect, a method for a PEI is provided in embodiments of the disclosure. The method includes determining a bit location of a subgroup in a PO in a PEI PDCCH.

As can be seen, the bit location of the subgroup in the PO in the PEI PDCCH is determined to implement design of the PEI.

In a fifth aspect, an apparatus for a PEI is provided in embodiments of the disclosure. The apparatus includes a determining unit. The determining unit is configured to determine a location of a PEI-O.

In a sixth aspect, an apparatus for a PEI is provided in embodiments of the disclosure. The apparatus includes a determining unit. The determining unit is configured to determine that a PEI-O corresponds to a PO in a PF or determine that the PEI-O corresponds to POs in multiple PFs.

In a seventh aspect, an apparatus for a PEI is provided in embodiments of the disclosure. The apparatus includes a determining unit. The determining unit is configured to determine a number of bits of a PEI PDCCH.

In an eighth aspect, an apparatus for a PEI is provided in embodiments of the disclosure. The apparatus includes a determining unit. The determining unit is configured to determine a bit location of a subgroup in a PO in a PEI PDCCH.

In a ninth aspect, the operations in the method designed in the first aspect, the second aspect, the third aspect, or the fourth aspect are applied to a terminal.

In a tenth aspect, a terminal is provided in embodiments of the disclosure. The terminal includes a processor, a memory, and computer programs or instructions stored in the memory. The processor is configured to execute the computer programs or instructions to implement the operations in the method designed in the first aspect, the second aspect, the third aspect, or the fourth aspect.

In an eleventh aspect, a chip is provided in embodiments of the disclosure. The chip includes a processor. The processor is configured to perform the operations in the method designed in the first aspect, the second aspect, the third aspect, or the fourth aspect.

In a twelfth aspect, a chip module is provided in embodiments of the disclosure. The chip module includes a transceiver component and a chip. The chip includes a processor. The processor is configured to perform the operations in the method designed in the first aspect, the second aspect, the third aspect, or the fourth aspect.

In a thirteenth aspect, a computer-readable storage medium is provided in embodiments of the disclosure. The computer-readable storage medium is configured to store computer programs or instructions. The computer programs or instructions are executed to implement the operations in the method designed in the first aspect, the second aspect, the third aspect, or the fourth aspect.

In a fourteenth aspect, a computer program product is provided in embodiments of the disclosure. The computer program product includes computer programs or instructions. The computer programs or instructions are executed to implement the operations in the method designed in the first aspect, the second aspect, the third aspect, or the fourth aspect.

BRIEF DESCRIPTION OF THE DRAWINGS

To describe technical solutions in embodiments of the disclosure more clearly, the following briefly introduces accompanying drawings required for describing the embodiments or the related art.

FIG. 1 is a schematic diagram illustrating an architecture of a wireless communication system according to embodiments of the disclosure.
FIG. 2 is a schematic flowchart illustrating a method for a paging early indication (PEI) according to embodiments of the disclosure.
FIG. 3 is a schematic flowchart illustrating a method for a PEI according to another embodiment of the disclosure.
FIG. 4 is a schematic flowchart illustrating a method for a PEI according to another embodiment of the disclosure.
FIG. 5 is a schematic flowchart illustrating a method for a PEI according to another embodiment of the disclosure.
FIG. 6 is a block diagram illustrating functional units of an apparatus for a PEI according to embodiments of the disclosure.
FIG. 7 is a block diagram illustrating functional units of an apparatus for a PEI according to another embodiment of the disclosure.
FIG. 8 is a block diagram illustrating functional units of an apparatus for a PEI according to another embodiment of the disclosure.
FIG. 9 is a block diagram illustrating functional units of an apparatus for a PEI according to another embodiment of the disclosure.
FIG. 10 is a schematic structural diagram illustrating a terminal according to embodiments of the disclosure.
FIG. 11 is a schematic structural diagram illustrating a terminal according to another embodiment of the disclosure.
FIG. 12 is a schematic structural diagram illustrating a terminal according to another embodiment of the disclosure.
FIG. 13 is a schematic structural diagram illustrating a terminal according to another embodiment of the disclosure.

DETAILED DESCRIPTION

It may be understood that the terms "first", "second", and the like involved in embodiments of the disclosure are used to distinguish different objects rather than describe a particular order. In addition, the terms "include", "comprise", and "have" as well as variations thereof are intended to cover non-exclusive inclusion. For example, a process, method, software, product, or device including a series of steps or units is not limited to the listed steps or units, on the contrary, it can include other steps or units that are not listed; or other steps or units inherent to the process, method, product, or device can be included either.

The term "embodiment" involved herein means that a particular feature, structure, or feature described in conjunction with the embodiments may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that the embodiments described herein may be combined with other embodiments.

The "at least one" in embodiments of the disclosure refers to one or more, and "plurality of" or "multiple" refers to two or more.

The term "and/or" in embodiments of the disclosure illustrates an association relationship of associated objects, indicating that three relationships can exist, for example, A and/or B may mean A alone, both A and B exist, and B alone.

A and B each may be a singular from or a plural form. The character "/" herein may indicate that the associated objects are in an "or" relationship. In addition, the symbol "/" may represent a division sign, i.e., perform a division operation.

The term "at least one (item) of" or the like in embodiments of the disclosure refers to any combination of these items, including any combination of a single item or multiple items. For example, at least one (item) of a, b, or c can represent the following seven cases: a; b; c; a and b; a and c; b and c; a, b, and c. a, b, and c each may be an element or a set including one or more elements.

The term "equal to" in embodiments of the disclosure can be used in conjunction with greater than and applicable to the technical solution used in the case of greater than; or can be used in conjunction with less than and applicable to the technical solution used in the case of less than. When equal to is used in conjunction with greater than, equal to is not in conjunction with less than. When equal to is used in conjunction with less than, equal to is not in conjunction with greater than.

In embodiments of the disclosure, the terms "of', "corresponding, relevant", "corresponding", and "indicated" may sometimes be used interchangeably. It may be pointed out that meanings represented by the terms are consistent when differences therebetween are not emphasized.

The "connection" in embodiments of the disclosure refers to various manners of connection, such as direct connection or indirect connection, so as to implement communication between devices, which is not limited herein.

The terms "network" and "system" in embodiments of the disclosure can be expressed as the same concept, and a communication system is a communication network.

The technical solutions of embodiments of the disclosure are applicable to various wireless communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 6th-generation (6G) communication system, or other communication systems, etc.

It may be noted that a conventional wireless communication system generally supports a limited quantity of connections and therefore is easy to implement. However, with development of communication technology, a wireless communication system will not only support conventional wireless communication systems but also support, for example, device to device (D2D) communication, machine to machine (M2M) communication, machine type communication (MTC), vehicle to vehicle (V2V) communication, vehicle to everything (V2X) communication, a narrow band internet of things (NB-IoT), etc. Therefore, the technical solutions in embodiments of the disclosure can also be applied to the wireless communication systems above.

In addition, the technical solutions in embodiments of the disclosure may be applied to a beamforming scenario, a carrier aggregation (CA) scenario, a dual connectivity (DC) scenario, a standalone (SA) deployment scenario, etc.

In embodiments of the disclosure, the spectrum used for communication between terminals and network devices or the spectrum used for communication between terminals can be a licensed spectrum or an unlicensed spectrum, which is not limited herein. It may be noted that the unlicensed spectrum may be understood as a shared spectrum, and the licensed spectrum may be understood as a non-shared spectrum.

Since each embodiment is described in conjunction with a terminal and a network device in embodiments of the disclosure, the following provides a specific description of involved terminals and network devices.

Specifically, the terminal may be a device with transmitting and receiving functions. The terminal may also be referred to as a user equipment (UE), a remote UE, a relay UE, an access terminal, a subscriber unit, a subscriber station, a mobile station, a remote station, a mobile device, a user terminal, a smart terminal, a wireless communication device, a user agent, a user apparatus, etc. It may be noted that relay UE is a terminal that can provide relay forwarding services to other terminals (including remote UEs).

The terminal may also be referred to as a cellular radio telephone, a cordless telephone, a session initiation protocol (SIP) telephone, a wireless local loop (WLL) station, a personal digital assistant (PDA), a device with wireless communication functions such as a handheld device, a computing device, or other processing devices coupled with a wireless modem, an in-vehicle device, a wearable device, and a terminal in a next-generation communication system (for example, an NR communication system or a 6G communication system), a terminal in a future evolved public land mobile network (PLMN), etc., which is not specifically limited herein.

In addition, the terminal may be deployed on land, which includes indoor or outdoor, handheld, wearable, or in-vehicle. The terminal may also be deployed on water (such as ships, etc.). The terminal may also be deployed in the air (such as airplanes, balloons, satellites, etc.).

The terminal may include an apparatus with wireless communication functions, such as a chip system, a chip, a chip module, etc. The chip system may include a chip and other discrete devices.

Exemplarily, the terminal may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

Specifically, the network device may be a device with transmitting and receiving functions. The network device may be a device used for communication with terminals, responsible for radio resource management (RRM), quality of service (QoS) management, data compression and encryption, data transmission and reception at the air interface side.

The network device may be a base station (BS) in the communication system or a device deployed in a radio access network (RAN) to provide wireless communication functions, for example, a base transceiver station (BTS) in the GSM or CDMA communication system, a node B (NB) in the WCDMA communication system, an evolved node B (eNB or eNodeB) in the LTE communication system, a next generation evolved node B (ng-eNB) in the NR communication system, a next generation node B (gNB) in the NR communication system, a master node (MN) in a dual link architecture, or a second node or a secondary node (SN) in the dual link architecture, which is not specifically limited herein.

Alternatively, the network device may also be other devices in a core network (CN), such as access and mobility management function (AMF), user plan function (UPF), etc. The network device may also be an access point (AP) in the WLAN, a relay station, a communication device in the future evolved PLMN, a communication device in the NTN, etc.

The network device may include an apparatus with wireless communication functions, such as a chip system, a chip, a chip module, etc. The chip system may include a chip and other discrete devices.

In addition, the network device can also communicate with an internet protocol (IP) network, for example, the internet, a private IP network, or other data networks.

In some deployments, the network device may be an independent node to implement all functions of the above BS. The network device may include a centralized unit (CU) and a distributed unit (DU), such as a gNB-CU and a gNB-DU. The network device may further include an active antenna unit (AAU). The CU implements some functions of the network device, and the DU implements some other functions of the network device. For example, the CU is responsible for processing non-real-time protocols and services, and implements functions of a radio resource control (RRC) layer, functions of a service data adaptation protocol (SDAP) layer, and functions of a packet data convergence protocol (PDCP) layer. The DU is responsible for processing physical (PHY) layer protocols and real-time services, and implements functions of a radio link control (RLC) layer, functions of a medium access control (MAC) layer, and functions of a PHY layer. In addition, the AAU implements some PHY layer processing functions, radio frequency processing functions, and active-antenna related functions. Since RRC layer information will eventually become PHY layer information, or is transformed from PHY layer information, in this network deployment, it may be considered that higher layer signaling (such as RRC layer signaling) is transmitted by the DU, or transmitted by both the DU and the AAU. It may be understood that, the network device may include at least one of the CU, the DU, or the AAU. In addition, the CU may be categorized as a network device in the RAN, or may be categorized as a network device in the CN, which is not specifically limited herein.

In embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

Specifically, the network device can provide communication services to terminals within a coverage range of a cell. The cell may include a macro cell, a small cell, a metro cell, a micro cell, a pico cell, a femto cell, etc.

The following exemplarily illustrates a wireless communication system in embodiments of the disclosure.

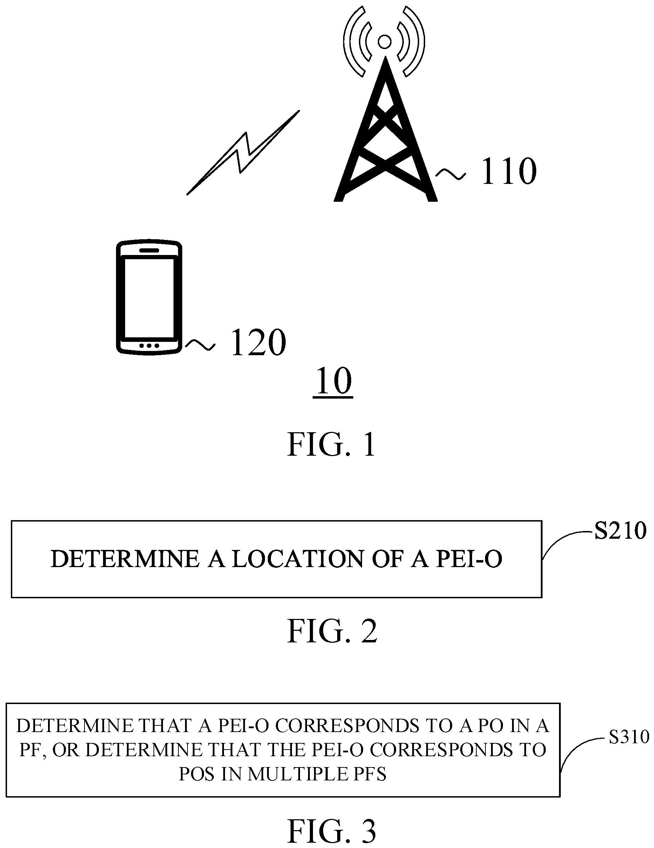

Exemplarily, for a network architecture of the wireless communication system in embodiments of the disclosure, reference can be made to FIG. 1. As illustrated in FIG. 1, the wireless communication system 10 may include a network device 110 and a terminal 120. The network device 110 may communicate with the terminal 120 through a wireless manner.

FIG. 1 is only an example of the network architecture of the wireless communication system, and does not constitute a limitation on the network architecture of the communication system in embodiments of the disclosure. For example, in embodiments of the disclosure, the wireless communication system may further include a processor or other devices. For example, in embodiments of the disclosure, the wireless communication system may include multiple network devices and/or multiple terminal devices.

First of all, terms involved in embodiments of the disclosure are explained to facilitate understanding by those of skill in the art.

1. Paging-related physical downlink control channel (PDCCH)

Generally, in a radio resource control (RRC) idle (RRC_IDLE) state or an RRC inactive (RRC_INACTIVE) state, a terminal needs to monitor a paging-related PDCCH, which is also referred to as a type 2-PDCCH. A radio network temporary identity (RNTI) of the paging-related PDCCH is a P-RNTI, and a downlink control information (DCI) format used is DCI format 1-0.

After the paging-related PDCCH is detected by the terminal (cyclic redundancy check (CRC) is descrambled successfully via the P-RNTI), the terminal may parse DCI. The DCI may contain a short message, so that the terminal can obtain alarm information or update system information. In addition, the DCI may also contain scheduling information, so that the terminal can receive a paging-related physical downlink shared channel (PDSCH), thereby obtaining a paging message. Furthermore, the terminal can initiate random access to enter a connected (RRC_CONNECTED) state.

The paging message has functions as follows.

(1) Send a call request to the terminal in the RRC_IDLE state.
(2) Notify the terminal in the RRC_IDLE state, the terminal in the RRC_INACTIVE state, or the terminal in the RRC_CONNECTED state of the system information that has changed.
(3) Indicate that the terminal starts to receive an earthquake and tsunami warning system (ETWS) primary notification and/or an ETWS secondary notification; or indicate that the terminal starts to receive a commercial mobile alert system (CMAS) notification.

In addition, before the terminal obtains the paging message, the terminal needs to complete time-frequency synchronization via a reference signal (e.g., a synchronization signal/physical broadcast channel block (SSB)) and complete automatic gain control (AGC) adjustment.

A paging-related PDCCH monitoring occasion may be configured by a search space set (SSS).

The terminal in the RRC_IDLE state or the RRC_INACTIVE state may receive the paging message through a discontinuous reception (DRX) mechanism to reduce power consumption. One DRX cycle may contain at least one paging frame (PF).

One PF may be a radio frame or a system frame, and may contain one or more paging occasions (POs) or a starting point of a PO.

A PO may be used for determining a starting point of a monitoring occasion in a PF. The PO may represent a time-domain location of a paging-related PDCCH. The PO may be used for sending paging DCI. The PO may consist of multiple subframes, multiple slots, or multiple orthogonal frequency division multiplexing (OFDM) symbols, or may consist of multiple paging-related PDCCH monitoring occasions. The paging-related PDCCH monitoring occasion may also be referred to as a paging PDCCH monitoring occasion (PMO). Therefore, one PO may contain multiple PMOs.

The PMOs are multiple monitoring occasions in a sequence starting from the starting point, and the PMOs are in one-to-one association with SSBs sent actually.

The terminal may determine, according to a device identifier (UE_ID) of the terminal, a location of a PF or PO to which the terminal belongs.

2. RRM measurement

In the RRC_IDLE state or the RRC_INACTIVE state, the terminal further needs to perform periodic RRM measurement. The RRM measurement may include serving cell measurement and neighboring cell measurement.

The neighboring cell measurement may include the following. The network device provides a frequency, and the terminal can perform cell search and measurement on the frequency. Optionally, the network device provides the frequency and a physical cell identity (PCI), and the terminal can perform cell search and measurement on the frequency using the PCI. Optionally, the network device neither provides the frequency nor the PCI, and the terminal can autonomously perform cell search and measurement.

The neighboring cell measurement can also be classified into intra-frequency measurement and inter-frequency measurement.

For example, if a center frequency of an SSB of a neighboring cell in measurement objects is the same as that of an SSB of a serving cell and a subcarrier spacing of the SSB of the neighboring cell in the measurement objects is the same as that of the SSB of the serving cell, such measurement is the intra-frequency measurement.

For example, if the center frequency of the SSB of the neighboring cell in measurement objects is different from that of the SSB of the serving cell and the subcarrier spacing of the SSB of the neighboring cell in the measurement objects is different from that of the SSB of the serving cell, such measurement is inter-frequency measurement.

In the RRC_IDLE state or the RRC_INACTIVE state, the terminal generally needs to perform RRM measurement on a serving cell once in a paging cycle. The paging cycle is also referred to as a DRX cycle or an idle state-DRX cycle.

Therefore, in the RRC_IDLE state or the RRC_INACTIVE state, monitoring the paging-related PDCCH and performing RRM measurement are main operations of the terminal.

3. Paging early indication (PEI)

In order to achieve monitoring of the paging-related PDCCH and performing of RRM measurement, generally, the network device needs to page the terminal in advance, and thus the terminal wakes up from deep sleep to deal with three SSB bursts. When certain time-frequency synchronization is achieved, the terminal monitors the paging-related PDCCH and performs RRM measurement.

In a process of monitoring the paging-related PDCCH, in order to avoid unnecessary monitoring and save power consumption of the terminal, in the RRC_IDLE state or the RRC_INACTIVE state, the network device may configure a PEI, where the PEI may indicate whether the terminal needs to continue to monitor the paging-related PDCCH, thereby achieving a purpose of saving power consumption. The PEI may be DCI, a sequence, or the like.

When the PEI is configured, the terminal wakes up from deep sleep to deal with one SSB burst, and thus the terminal can detect the PEI when certain time-frequency synchronization is achieved.

If the PEI indicates that the terminal needs to continue to monitor the paging-related PDCCH monitoring occasion, the terminal continues to deal with the remaining two SSB bursts and continues to monitor the paging-related PDCCH.

If the PEI indicates that the terminal does not need to continue to monitor the paging-related PDCCH monitoring occasion, the terminal returns to deep sleep.

When a group paging rate is 10%, a probability that the terminal needs to monitor the paging-related PDCCH is 10%. Therefore, under the 10% probability, the terminal needs to deal with three SSB bursts, monitor the paging-related PDCCH, and perform RRM measurement. Under the 90% probability, the terminal only needs to deal with one SSB burst and perform RRM measurement. Therefore, under the 90% probability, the terminal deals with relatively few signals/channels, a waking time is relatively short (if the terminal does not deal with signals/channels after waking up from deep sleep, the terminal is in light sleep), and power consumption is relatively low.

In conclusion, by using the PEI, the terminal can achieve the purpose of power saving.

4. PEI occasion (PEI-O)

Similar to the PO, the PEI-O may consist of a set of PEI PDCCH monitoring occasions and represents a time-domain location of a PEI PDCCH. The PEI PDCCH monitoring occasion may also be referred to as a PEI monitoring occasion (PEI-MO). Therefore, the PEI-O may include multiple PEI-MOs.

Since PEI-MOs are in one-to-one association with SSBs in 5 milliseconds, the terminal may select a PEI-MO associated with an SSB according to measurement results of the SSBs and monitor the PEI-MO.

5. PEI group, PF group, PO group, subgroup in PO

The PEI can indicate whether a UE group corresponding to a PO needs to monitor the PO, where power saving is achieved under the premise that a probability of paging the UE group corresponding to the PO is relatively small (such as 10%). However, when the probability of paging the UE group corresponding to the PO is relatively high, a probability, indicated by the PEI, that the UE group corresponding to the PO needs to monitor the PO is also relatively high. In this case, power saving is not always achieved.

In order to achieve power saving, a solution may be to introduce a UE subgroup, where the UE subgroup represents a subgroup of the UE group corresponding to the PO. In the case that the PEI indicates whether the subgroup of the UE group corresponding to the PO needs to monitor the PO, since a probability of paging the subgroup of the UE group corresponding to the PO may be relatively small, a probability, indicated by the PEI, that the subgroup of the UE group corresponding to the PO needs to monitor the PO is also relatively small.

It may be noted that for ease of description, in embodiments of the disclosure, a UE group corresponding to a PEI-O may be referred to as a "PEI group", a UE group corresponding to a PF may be referred to as a "PF group", a UE group corresponding to a PO may be referred to as a "PO group", and a subgroup of a UE group in a PO may be referred to as a "subgroup in the PO".

Since the "subgroup in the PO" needs to be taken into account in embodiments of the disclosure, the network device may configure a parameter *Nsg,* where *Nsg* represents the number of all subgroups in a PO (i.e., the number of subgroups of all UE groups in the PO). When *Nsg=1,* the "subgroup in the PO" is equivalent to a "PO group".

In addition, the PEI-O in embodiments of the disclosure may be understood as both a PEI occasion and a "PEI group" (the PEI group monitors a PEI in the PEI occasion), which is not specifically limited herein.

The PF in embodiments of the disclosure can be understood as both a paging frame and a "PF group" (the PF group monitors paging in the paging frame), which is not specifically limited herein.

The PO in embodiments of the disclosure may be understood as both a paging occasion and a PO group (the PO group monitors paging in the paging occasion), which is not specifically limited herein.

In conclusion, the PEI-O represents a time-domain location of a PEI PDCCH. However, the standard protocol currently specified by the 3GPP has not specified a design scheme of the PEI-O. Therefore, how to further design the current PEI, for example, how to determine a location of the PEI-O, the number of bits of the PEI PDCCH, the number of bits of DCI corresponding to the PEI PDCCH, a bit location of a PO group or a UE subgroup in a PO in the PEI PDCCH, and a bit location of the PO group or the UE subgroup in the PO in the DCI corresponding to the PEI PDCCH, is an urgent problem to be solved.

In order to design the PEI-O, the following embodiments of the disclosure specifically describe how to determine the location of the PEI-O, how to determine the number of the bits of the PEI PDCCH or the number of the bits of the DCI corresponding to the PEI PDCCH, how to determine the bit location of the PO group or the subgroup in the PO in the PEI PDCCH, how to determine the bit location of the PO group or the subgroup in the PO in the DCI corresponding to the PEI PDCCH, and the like.

Heretofore, the meanings/explanations of abbreviations used in embodiments of the disclosure are described uniformly.

PEI: paging early indication.
PEI-O: PEI occasion.
PEI-F: a frame of a PEI-O.
$SFN$: system frame number of a PF of a target PO.
$SFN\_pei$: a system frame number of a PEI-F.
$PEI\_offset$: a frame offset.
$PEI\_offset(i\_pf)$: a frame offset related to $i\_pf$.
$frame\_offset$: a frame offset independent of $i\_pf$.
$UE\ ID$ (UE identity): terminal identity.
$T$: a DRX cycle.
$N$: the number of PFs in $T$.
$N\_pei$: the number of PEIs in $T$.
$M$: the number of POs corresponding to a PEI.
$Ns$: the number of POs per PF.
$Nsg$: the number of subgroups in a PO.
$i\_pf$: an index of a PF of a target PO in $T$.
$i\_f$: an index of a PF of a target PO in a PEI.
$i\_s$: an index of a target PO in a PF.
$i\_sg$: an index of a subgroup in a target PO in POs.
$i\_pei$: an index of a PEI of a target PO in $T$.
$i\_pf\_ref$: an index of a first PF corresponding to a PEI.
$i\_s\_ref$: an index of a first PO in a first PF corresponding to a PEI.
$Y$: the number of bits of first indication information.

It may be noted that $PEI\_offset$ may be understood as an offset of the PEI-F in $T$ in a time unit of a frame and thus is referred to as a frame offset for short. For example, in the case that an absolute time of the DRX cycle is 320 milliseconds (it can also be said that the DRX cycle is 32, and correspondingly, T = 32) and the frame offset is 1, the terminal calculates out $SFN\_pei$, i.e., a location (represented by a frame number) of the PEI-F, through $UE\ ID$ and $PEI\_offset$.

The target PO may be understood as a PO that the terminal needs to monitor, and the target PO is determined by the terminal according to $UE\ ID$. For a network, the DRX cycle may include multiple PFs, the PF may include multiple POs, and the terminal determines, according to $UE\_ID$, a PO to be monitored, i.e., a target PO.

The PF of the target PO may be understood as a PF which the target PO is in, a PF to which the target PO belongs, a PF to which the target PO corresponds, or a PF at which the target PO is located.

The PEI of the target PO may be understood as a PEI which the target PO is in, a PEI to which the target PO belongs, a PEI to which the target PO corresponds, or a PEI at which the target PO is located.

The first indication information may be understood as common information, such as information related to a short message and tracking reference signal (TRS) availability information.

In addition, the described abbreviations used in embodiments of the disclosure may have different expressions in different standard protocols, but other abbreviations have the same meaning or explanation all belong to the scope of protection of the disclosure, which are not specifically limited herein.

1. How to determine a location of a PEI-O

1) Location of PEI-O

It may be noted that with reference to the content in the foregoing "4. PEI-O", it can be seen that the PEI-O may consist of a set of PEI PDCCH monitoring occasions (also referred to as PEI-MOs) and represents a time-domain location of a PEI PDCCH.

The location of the PEI-O may be understood as a time-domain location of the PEI-O, such as a location of a time unit where the PEI-O is located, a location of a start time unit of the PEI-O, a location of an end time unit of the PEI-O, and a duration unit of the PEI-O.

In addition, the start time unit of the PEI-O may also be referred to as a start location of the PEI-O or a start time-domain location of the PEI-O, the end time unit of the PEI-O may also be referred to as an end location of the PEI-O or an end time-domain location of the PEI-O, and the duration unit of the PEI-O may also be referred to as a length of a duration of the PEI-O, which is not specifically limited herein.

2) Time unit

It may be noted that the time unit may be understood as a communication granularity of the terminal or the network device in the time domain, that is, the terminal or the network device performs communication in the time domain at a granularity/in the unit of the time unit. For example, the time unit may be a frame, such as a radio frame, a system frame, a subframe, a slot, a symbol (such as an OFDM symbol), or a mini slot, which is not specifically limited herein.

Taking that the time unit is a frame as an example, the time unit where the PEI-O is located may be a PEI-F.

Taking that the time unit is a symbol as an example, the start time unit of the PEI-O may be a start symbol of the PEI-O, and the end time unit of the PEI-O is an end symbol of the PEI-O. Similarly, in the case that the time unit is a slot, the start time unit of the PEI-O is a start slot of the PEI-O, and the end time unit of the PEI-O is an end slot of the PEI-O.

Taking that the time unit is a symbol as an example, the duration unit of the PEI-O may be implemented as consecutive symbols of the PEI-O. Similarly, in the case that the time unit is a slot, the duration unit of the PEI-O is implemented as consecutive slots of the PEI-O.

In conclusion, in embodiments of the disclosure, how to determine the location of the PEI-O can be realized by means of configuration information, i.e., the configuration information is used for determining the location of the PEI-O.

In summary, in embodiments of the disclosure, the PEI-F and the start location of the PEI-O need to be analyzed to indicate the PEI-F (coarse granularity) first and then indicate the start location (fine granularity) of the PEI-O in terms of signaling indication.

Therefore, in order to determine the location of the PEI-O, in embodiments of the disclosure, the location of the PEI-F and the start location of the PEI-O may be determined according to the configuration information. Details are described later.

3) Configuration information

It may be noted that the configuration information may be transmitted through higher-layer signaling or a higher-layer parameter in a process such as cell search, cell access, cell camping, random access, initial access, cell reselection, cell handover, and uplink and downlink resource scheduling, or the configuration information may be stipulated (defined/specified) by a standard protocol or may be preconfigured, which is not limited herein.

The configuration information may include at least one of: $PEI\_offset$, $PEI\_offset(i\_pf)$, $frame\_offset$, $UE\_ID$, a symbol offset, $SFN\_pei$, $T$, $N$, $N\_pei$, $M$, $Ns$, $Nsg$, $i\_pf$, $i\_f$, $i\_s$, $i\_sg$, $i\_pei$, etc.

It may be noted that if the DRX cycle in embodiments of the disclosure is configured by RRC and/or the higher layer, the DRX cycle may be determined by the shortest one of UE specific DRX values. Optionally, the DRX cycle may be a default DRX value broadcast in system information. In the RRC_IDLE state, the default DRX value is applied if the UE specific DRX value is not configured by the higher layer.

The following takes a terminal and a network device as an example for description.

Exemplarily, for the terminal, the terminal may obtain the configuration information, and determine a location of a PEI-O according to the configuration information.

Determine the location of the PEI-O according to the configuration information may include determine a location of a PEI-F and a start location of the PEI-O according to the configuration information.

For the network device, the network device may send the configuration information, where the configuration information may be used for determining the location of the PEI-O.

The configuration information may be used for determining the location of the PEI-F and the start location of the PEI-O.

With reference to the content in the foregoing "1) location of PEI-O", it can be seen that since the location of the PEI-O may include a location of a time unit where the PEI-O is located and a location of a start time unit of the PEI-O, the location of the time unit where the PEI-O is located and the location of the start time unit of the PEI-O are taken as examples below and are respectively described in detail.

4) How to determine the location of the time unit where the PEI-O is located

It may be noted that the location of the PEI-F may be represented by a frame number $SFN\_pei$ of the PEI-F.

In "how to determine the time unit where the PEI-O is located", embodiments of the disclosure are described by taking that the time unit is a frame as an example, and the same applies to other situations. Therefore, in embodiments of the disclosure, the location of the PEI-F may be determined according to the configuration information above.

① Location of PEI-F

The following describes how to determine the location of the PEI-F according to the configuration information above by means of examples.

Example 1

Taking that the configuration information includes $PEI\_offset$ as an example, the terminal may determine the location of the PEI-F according to $PEI\_offset.$

It may be noted that $PEI\_offset$ may enable that an offset of a PEI_O in $T$ is large enough (at a frame level), which is conducive for the network device to enable, through relatively less signaling, that the PEI_O has a flexible location. That is, if there is only a symbol offset to indicate an offset of 1 to 10 frames, the symbol offset needs to indicate 140 to 1400 (assuming that there are 140 symbols in a frame), but if there is a frame offset, the frame offset only needs to indicate 1 to 10, thereby saving signaling overhead. The combination of $PEI\_offset$ and the symbol offset may not only save signaling overhead, but also indicate the start location finely. The symbol offset is described later.

Example 2

Taking that the configuration information includes $PEI\_offset$ and $UE\ ID$ as an example, the terminal may determine the location of the PEI-F according to $PEI\_offset$ and $UE\_ID.$

It may be noted that since the location of the PEI-F may be determined according to $UE\_ID,$ the terminal only needs to monitor the PEI-O at the location of the PEI-F determined according to $UE\ ID$ of the terminal, thereby reducing complexity of the terminal and improving communication efficiency.

In addition, in embodiments of the disclosure, the PEI-O may correspond to a PO(s), and the PF may contain one or more POs. Therefore, the following two cases need to be analyzed in embodiments of the disclosure.

Case 1: the PEI-O corresponds to a PO(s) in one PF (one or more POs in one PF).
Case 2: the PEI-O corresponds to POs in multiple PFs (multiple POs in the multiple PFs).

② Case 1

In "case 1", when the PEI-O corresponds to the PO(s) in one PF (one or more POs in one PF), the location of the PEI-O may be configured before the one or more POs.

In embodiments of the disclosure, "case 1" may satisfy condition 1: $M<Ns$ or $M=Ns,$ where the sign "<" means less than, and the sign "=" means equal to.

It may be noted that since the PEI-O corresponds to the PO(s) in one PF, $M$ may represent the number of PO(s) corresponding to the PEI-O in one PF.

In embodiments of the disclosure, "condition 1" above may be referred to as "a first condition of the number of PO(s) corresponding to a PEI" or may also be referred to as other expressions, which is not specifically limited herein.

In addition, in embodiments of the disclosure, "case 1" may satisfy condition 2: $N\_pei > N$ or $N\_pei = N;$ and $N\_pei = \max(1, (Ns/M)*N)$ or $N\_pei = (Ns/M)*N.$ The sign ">" means greater than, the sign "/" is a division sign (i.e., executing a division operation), and the sign "*" is a multiplication sign (i.e., executing a multiplication operation).

It may be noted that since the PEI-O corresponds to POs in multiple PFs, $M$ may represent the number of POs corresponding to the PEI-O in the multiple PFs.

In embodiments of the disclosure, "condition 2" above may be referred to as "a first condition of the number of PEIs" or may also be referred to as other expressions, which is not specifically limited herein.

③ Case 2

In "case 2", when the PEI-O corresponds to the POs in the multiple PFs (multiple POs in the multiple PFs), the location of the PEI-O may be configured before the multiple PFs.

In embodiments of the disclosure, "case 1" may satisfy condition 3: $M > Ns$.

It may be noted that since the PEI-O corresponds to the POs in the multiple PFs, $M$ may represent the number of POs corresponding to the PEI-O in the multiple PFs.

In embodiments of the disclosure, "condition 3" above may be referred to as "a second condition of the number of POs corresponding to the PEI" or may also be referred to as other expressions, which is not specifically limited herein.

In addition, in embodiments of the disclosure, "case 2" may satisfy condition 4: $N\_pei < N$; and $N\_pei = \max(1, (Ns/M)*N)$ or $N\_pei = (Ns/M)*N$.

It may be noted that since the PEI-O corresponds to the POs in the multiple PFs, $M$ may represent the number of POs corresponding to the PEI-O in the multiple PFs.

In embodiments of the disclosure, "condition 4" above may be referred to as "a second condition of the number of PEIs" or may also be referred to as other expressions, which is not specifically limited herein.

(4) How to determine the location of the PEI-F in case 1

It may be noted that for how to determine the location of the PEI-F in case 1, in embodiments of the disclosure, $SFN\_pei$ may represent the location of the PEI-F, and $SFN\_pei$ is determined according to the configuration information above.

The following describes how to determine $SFN\_pei$ according to the configuration information above by means of examples.

Example 1

Taking that the configuration information includes $PEI\_offset, T, N,$ and $UE\_ID$ as an example, $SFN\_pei$ may satisfy: $(SFN\_pei + PEI\_offset) \bmod T = (T/N)*(UE\_ID \bmod N)$, where mod represents a modulo operation. For example, $A \bmod B$ represents a remainder obtained by dividing $A$ by $B$.

It may be noted that $UE\ ID$ may be 5G-S-temporary mobile subscriber identity (TMSI) mod 1024, $SFN\_pei$ is determined by $\log2(N)$ least significant bits (LSBs) of $UE\_ID$ (i.e., $i\_pf = (UE\_ID \bmod N)$), and $N$ PFs are evenly distributed in $T$ (i.e., represented by multiplying $T/N$), where log2 is a logarithm taking 2 as the base, which is equivalent to the number of bits (the number of binary numbers).

In addition, the method is used on the premise that the first condition of the number of the POs corresponding to the PEI or the first condition of the number of the PEIs in "case 1" is satisfied.

Example 2

Taking that the configuration information includes $PEI\_offset$ and $SFN$ as an example, $SFN\_pei$ may satisfy: $SFN\_pei = SFN - PEI\_offset$.

It can be seen that the terminal can determine $SFN\_pei$ through $SFN$ and $PEI\_offset$, which is easy to implement.

$SFN\_pei$ needs to satisfy the first condition of the number of the POs corresponding to the PEI or the first condition of the number of the PEIs in "case 1".

⑤ How to determine the location of the PEI-F in case 2

It may be noted that for how to determine the location of the PEI-F in case 2, in embodiments of the disclosure, the location of the PEI-F may be represented by a frame number $SFN\_pei$ of the PEI-F, and $SFN\_pei$ is determined according to the configuration information above.

The following describes how to determine $SFN\_pei$ according to the configuration information above by means of examples.

Example 1

Taking that the configuration information includes $PEI\_offset, N\_pei,$ and $i\_pei, SFN\_pei$ may satisfy: $(SFN\_pei + PEI\_offset) \bmod T = (T/N\_pei)*i\_pei,$ and $N\_pei = \max(1, (Ns/M)*N)$.

It can be seen that in embodiments of the disclosure, $SFN\_pei$ may be determined by $N\_pei,$ and $N\_pei$ PEIs are evenly dispersed in $T$ (by multiplying $T/N\_pei$). In addition, the terminal can calculate out $N\_pei$ only with parameters *Ns, M,* and *N,* where *N_pei* cannot be less than 1, that is, the number of PEIs in *T* cannot be less than 1.

In addition, *SFN_pei* needs to satisfy the second condition of the number of the POs corresponding to the PEI or the second condition of the number of the PEIs in "case 2".

*i_pei* may be expressed in the following manners.

Manner 1

$i\_pei = \text{floor}((UE\_ID \bmod N)/(N/N\_pei))$

In this way, *i_pei* is equivalent to extract log2(*N*) LSBs of *UE ID* first and then right shift by log2(*N/N_pei*) bits.

For example, when *N* is 4 and *N_pei* is 2, $i\_pei = \text{floor}((UE\_ID \bmod 4)/2$ is equivalent to extract 2 LSBs of *UE_ID* first and then right shift by 1 bit. That is, a penultimate LSB is extracted.

Manner 2

$i\_pei = \text{floor}(UE\_ID/(N/N\_pei)) \bmod N\_pei$

In this way, *i_pei* is equivalent to right shift *UE ID* by log2(*N/N_pei*) bits first and then extract log2(*N_pei*) LSBs.

For example, when *N* is 4 and *N_pei* is 2, $i\_pei = \text{floor}((UE\_ID/2) \bmod 2)$ is equivalent to right shift *UE_ID* by 1 bit first and then extract 1 LSB of *UE_ID.* That is, the penultimate LSB is extracted.

Manner 3

$i\_pei = \text{floor}(\max(UE\_ID/N, UE\_ID*Ns/M)) \bmod N\_pei$

In this formula, compared with the formula in manner 2, *N_pei* is replaced with $N\_pei = \max(1, (Ns/M)*N),$ $N\_pei/N = \max(1/N, Ns/M)$, and $UE\_ID * N\_pei/N = \max(UE\_ID/N, UE\_ID * Ns/M),$ so that the terminal can calculate out *i_pei* without calculating *N_pei.*

Alternatively, $i\_pei = \text{floor}(UE\_ID*Ns/M) \bmod N\_pei.$

In this formula, compared with the formula in manner 2, *N_pei* is replaced with $N\_pei = (Ns/M)*N$, $N\_pei/N = Ns/M,$ and $UE\_ID * N\_pei/N = UE\_ID*Ns/M,$ so that the terminal can calculate out *i_pei* without calculating *N_pei.*

Example 2

Taking that the configuration information includes *PEI_offset(i_f)*, *frame_offset, SFN,* and *i_f* as an example, *SFN_pei* may satisfy: $SFN\_pei = SFN\text{-}PEI\_offset(i\_f)$; and $PEI\_offset(i\_f) = frame\_offset + i\_f*(T/N)$. *PEI_offset(i_f)* represents a frame offset related to *i_f, SFN* represents a frame number of a PF of a target PO, and *frame_offset* represents a frame offset independent of *i_f.*

It can be seen that the terminal can determine *SFN_pei* through *FN* and *PEI_offset(i_f)*, which is easy to implement. In addition, for different PFs, *PEI_offset(i_f)* represents different frame offsets related to *i_f.*

It may be noted that *SFN_pei* needs to satisfy the second condition of the number of the POs corresponding to the PEI or the second condition of the number of the PEIs in "case 2".

Example 3

Taking that the configuration information includes *UE_ID, PEI_offset(i_f), T, i_f, N,* and *frame_offset* as an example, *SFN_pei* may satisfy: $(SFN\_pei + PEI\_offset(i\_f)) \bmod T = (T/N)*UE\_ID \bmod N$; and $PEI\_offset(i\_f) = frame\_offset + i\_f*(T/N)$.

It can be seen that *SFN_pei* is determined through *i_f, N* PFs are evenly dispersed in T (by multiplying by *T/N*). In addition, for different PFs, *PEI_offset(i_f)* represents different frame offsets related to *i_f*

It may be noted that *SFN_pei* needs to satisfy the second condition of the number of the POs corresponding to the PEI or the second condition of the number of the PEIs in "case 2".

5) How to determine the start time unit of the PEI-O

In "how to determine the start time unit of the PEI-O", in embodiments of the disclosure, the start time unit of the PEI-O is referred to as a start location of the PEI-O. Therefore, in embodiments of the disclosure, the start location of the PEI-O may be determined according to the configuration information above.

① Start location of PEI-O

The following describes how to determine the start location of the PEI-O according to the configuration information above by means of examples.

Example 1

Taking that the configuration information includes a symbol offset as an example, the terminal may determine the start location of the PEI-O according to the symbol offset.

The symbol offset is a symbol offset of the start location of the PEI-O relative to the start location of the PEI-F.

It may be noted that the start location of the PEI-F may include a first symbol of the PEI-F.

It can be seen that since the symbol offset may enable that the PEI-O has a symbol-level offset in the frame and enable that the start location of the PEI-O is fine enough, the network device may enable the PEI-O to approach the SSB through the symbol offset, so that after the terminal completes processing (AGC and time-frequency synchronization) of the SSB, the terminal can monitor the PEI PDCCH as soon as possible.

Example 2

Taking that the configuration information includes a reference time and an offset as an example, the terminal may determine the start location of the PEI-O according to the reference time and the offset.

The reference time may be a start location of a PO corresponding to a PEI. In this way, the terminal can determine the location of the PEI-O only according to the start location of the PO corresponding to the PEI and the offset, which is easy to implement.

The offset may be *PEI_offset,* a symbol offset, or an absolute time offset. For example, the absolute time offset is 0.125 milliseconds.

Furthermore, the PO corresponding to the PEI may be a first PO in a first PF corresponding to the PEI. In this way, the terminal may determine by default that the first PO in the first PF corresponding to the PEI is the start location, which is easy to implement.

In embodiments of the disclosure, the PEI-O may correspond to a PO(s), and the PF may contain one or more POs. Therefore, same as the foregoing "4) how to determine the location of the time unit where the PEI-O is located", there are two cases, i.e., case 1 and case 2, which are not repeated herein.

② How to determine a symbol offset in example 1 in case 1

It may be noted that for how to determine the symbol offset in example 1 in case 1, in embodiments of the disclosure, the symbol offset may be determined according to a symbol offset index, that is, the symbol offset is determined according to the symbol offset index.

The symbol offset index is equal to foor($i\_s/M$).

It can be seen that the network device may configure start locations of $Ns/M$ PEI-Os by configuring $Ns/M$ symbol offsets. In other words, there are $Ns/M$ PEI-Os in a PEI-F, and the network device needs to configure $Ns/M$ symbol offsets.

In addition, the symbol offset index needs to satisfy the first condition of the number of the POs corresponding to the PEI or the first condition of the number of the PEIs in "case 1".

(3) How to determine the symbol offset in example 1 in case 2

It may be noted that for how to determine the symbol offset in example 1 in case 2, in embodiments of the disclosure, the symbol offset may be determined according to a symbol offset index, that is, the symbol offset is determined according to the symbol offset index.

The symbol offset index is equal to 0.

It can be seen that since the PEI corresponds to multiple PFs, the network device may configure only one symbol offset to determine the location of the PEI-O. In other words, there is one PEI-O is in a PEI-F, and thus the network device needs to configure one symbol offset.

In addition, the symbol offset index needs to satisfy the second condition of the number of the POs corresponding to the PEI or the second condition of the number of the PEIs in "case 2".

(4) The first PF corresponding to the PEI in example 2 in case 1

It may be noted that for the first PF corresponding to the PEI in example 2 in case 1, in embodiments of the disclosure, an index *i_pf_ref* of the first PF corresponding to the PEI needs to be determined, where *i_pf_ref* may satisfy: *i_pf_ref = i_pf.*

It can be seen that the terminal can deduce the index of the first PF corresponding to the PEI according to an index *i_pf* of the PF of the target PO (i.e., a PO corresponding to *UE ID* of the terminal), thereby facilitating easy implementation.

In addition, *i_pf_ref* needs to satisfy the first condition of the number of the POs corresponding to the PEI or the first condition of the number of the PEIs in "case 1".

(5) The first PF of the PEI in example 2 in case 2

It may be noted that for the first PF corresponding to the PEI in example 2 in case 2, in embodiments of the disclosure, *i_pf_ref* needs to be determined, where *i_pf_ref* may satisfy: *i_pf_ref* = floor(*i_pf*/(*M*/*Ns*))*M*/*Ns.*

It can be seen that the terminal can deduce the index of the first PF corresponding to the PEI according to the index *i_pf* of the PF of the target PO (i.e., the PO corresponding to *UE ID* of the terminal), thereby facilitating easy implementation.

It may be noted that *i_pf_ref* needs to satisfy the second condition of the number of the POs corresponding to the PEI or the second condition of the number of the PEIs in "case 2".

⑥ The first PO in the first PF corresponding to the PEI in example 2 in case 1

It may be noted that for the first PO in the first PF corresponding to the PEI in example 2 in case 1, in embodiments of the disclosure, an index *i_s_ref* of the first PO in the first PF corresponding to the PEI needs to be determined, where *i_s_ref* may satisfy: *i_s_ref = floor(i_s/M) * (Ns IM).*

It can be seen that the terminal can deduce the index of the first PO in the first PF corresponding to the PEI according to an index *i_s* of the target PO (i.e., the PO corresponding to *UE ID* of the terminal), thereby facilitating easy implementation.

It may be noted that *i_s_ref* needs to satisfy the first condition of the number of the POs corresponding to the PEI or the first condition of the number of the PEIs in "case 1".

⑦ The first PO in the first PF corresponding to the PEI in example 2 in case 2

It may be noted that for the first PO in the first PF corresponding to the PEI in example 2 in case 2, in embodiments of the disclosure, *i_s_ref* needs to be determined, where *i_s_ref* is 0.

It can be seen that the terminal may determine by default that the index of the first PO in the first PF corresponding to the PEI is 0, which is beneficial to reducing complexity and is easy to implement.

It may be noted that *i_s_ref* needs to satisfy the second condition of the number of the POs corresponding to the PEI or the second condition of the number of the PEIs in "case 2".

6) How to distinguish case 1 from case 2

With reference to the content in "4) how to determine the location of the time unit where the PEI-O is located", it can be seen that case 1 and case 2 need to be analyzed in embodiments of the disclosure.

That is, it is determined that the PEI-O corresponds to the PO(s) in the PF, or it is determined that the PEI-O corresponds to the POs in the multiple PFs.

Therefore, in order to distinguish case 1 from case 2 and implement the design of the PEI, case 1 can be distinguished from case 2 according to the configuration information above in embodiments of the disclosure.

The following uses a terminal and a network device as an example for description.

Exemplarily, for the terminal, the terminal may obtain the configuration information, and determine, according to the configuration information, that the PEI-O corresponds to the PO(s) in a PF (i.e., "case 1"), or that the PEI-O corresponds to the POs in the multiple PFs (i.e., "case 2").

For the network device, the network device may send the configuration information, where the configuration information is used for determining that the PEI-O corresponds to the PO(s) in the PF or that the PEI-O corresponds to the POs in the multiple PFs.

How to perform determination according to the configuration information is described below by means of examples.

Example 1

In some possible examples, determining that the PEI-O corresponds to the PO in the PF may include: determining that the PEI-O corresponds to the PO in the PF, in the case that a first condition of the number of POs corresponding to a PEI or a first condition of the number of PEIs is satisfied.

The first condition of the number of the POs corresponding to the PEI is determined by the configuration information, and the first condition of the number of the PEIs is determined by the configuration information.

It may be noted that for the explanations of the "first condition of the number of the POs corresponding to the PEI" and the "first condition of the number of the PEIs", reference can be made to the content in the foregoing "② case 1", which are not repeated herein.

Example 2

In some possible examples, determining that the PEI-O corresponds to the POs in the multiple PFs may include: determining that the PEI-O corresponds to the POs in the multiple PFs, in the case that a second condition of the number of POs corresponding to a PEI or a second condition of the number of PEIs is satisfied.

The second condition of the number of the POs corresponding to the PEI is determined by the configuration information, and the second condition of the number of the PEIs is determined by the configuration information.

It may be noted that for the explanations of "the second condition of the number of the POs corresponding to the PEI" and "the second condition of the number of the PEIs", reference can be made to the content in the foregoing "(3) case 2", which are not repeated herein.

In summary, in order to determine the location of the PEI-O, the location of the PEI-F (coarse granularity) and the start location of the PEI-O (fine granularity) can be determined in embodiments of the disclosure.

As can be seen that with reference to the content in "① location of PEI-F" and "① start location of PEI-O", the following examples can be used for determining the location of the PEI-O in embodiments of the disclosure.

Example 1

Taking that the configuration information includes *PEI_offset* and a symbol offset as an example, determining the location of the PEI-O according to the configuration information includes: determining the location of the PEI-F according to *PEI_offset,* and determining the start location of the PEI-O according to the symbol offset.

Example 2

Taking that the configuration information includes *PEI_offset, UE_ID,* and a symbol offset as an example, determining the location of the PEI-O according to the configuration information includes: determining the location of the PEI-F according to *PEI_offset* and *UE_ID,* and determining the start location of the PEI-O according to the symbol offset.

Example 3

Taking that the configuration information includes *PEI_offset,* a reference time, and an offset as an example, determining the location of the PEI-O according to the configuration information includes: determining the location of the PEI-F according to *PEI_offset,* and determining the start location of the PEI-O according to the reference time and the offset.

Example 4

Taking that the configuration information includes *PEI_offset, UE_ID,* a reference time, and an offset as an example, determining the location of the PEI-O according to the configuration information includes: determining the location of the PEI-F according to *PEI_offset* and *UE_ID,* and determining the start location of the PEI-O according to the reference time and the offset.

2. How to determine the number of bits of a PEI PDCCH

It may be noted that explanations of some concepts used herein can be consistent with "1. how to determine the location of the PEI-O" above, such as configuration information, case 1, case 2, etc., which are not repeated.

In addition, the number of bits of a PDCCH is the number of bits of DCI in the PDCCH or the number of bits of a DCI format corresponding to the PDCCH, and the terminal can decode out the DCI in the PDCCH only if the terminal knows in advance the number of the bits of the DCI in the PDCCH or the number of the bits of the DCI format corresponding to the PDCCH.

The following uses a terminal and a network device as an example for description.

Exemplarily, for the terminal, the terminal may obtain configuration information and determine the number of bits of a PEI PDCCH according to the configuration information.

For the network device, the network device can send the configuration information, where the configuration information is used for determining the number of bits of the PEI PDCCH.

The following describes how to determine the number of the bits of the PEI PDCCH according to the configuration information by means of examples.

Example 1

Taking that the configuration information includes at least one of: *Nsg, M, Y, N, N_pei,* or *Ns* as an example, determine the number of the bits of the PEI PDCCH as *Nsg\*M,* or determine the number of the bits of the PEI PDCCH as *Y+Nsg\*M,* or determine the number of the bits of the PEI PDCCH as *Nsg\*Ns\*(N/N_pei),* or determine the number of the bits of the PEI PDCCH as *Y+Nsg\*Ns\*(N/N_pei).*

It may be noted that for "subgroup in PO", reference can be made to the content in "5. PEI group, PF group, PO group, subgroup in PO", which are not repeated herein.

It can be seen that if the terminal determines that the PEI-O corresponds to one or more POs in the PF, and *Nsg* subgroups are in a PO, the terminal can determine the number of the bits of the PEI-PDCCH as *Nsg\*M.*

If the terminal determines that the PEI-O corresponds to the POs in the multiple PFs, a PEI corresponds to *N/N_pei* PFs, *Ns* POs are in a PF, and *Nsg* subgroups are in a PO, the terminal can determine the number of the bits of the PEI-PDCCH as *Nsg\*Ns\*(N/N_pei).*

The cause for adding Y is that first indication information is common information, such as information related to a short message, TRS availability information, etc.

Example 2

Taking that the configuration information includes *Nsg, Y,* and *M* as an example, determine the number of the bits of the PEI PDCCH as *Nsg\*M,* in the case that the first condition of the number of the POs corresponding to the PEI or the first condition of the number of the PEIs is satisfied; or determine the number of the bits of the PEI PDCCH as *Y+Nsg\*M,* in the case that the first condition of the number of the POs corresponding to the PEI or the first condition of the number of the PEIs is satisfied.

It may be noted that for the explanations of the "first condition of the number of the POs corresponding to the PEI" and the "first condition of the number of the PEIs", reference can be made to the content in the foregoing "② case 1", which are not repeated herein.

For "subgroup in PO", reference can be made to the content in "5. PEI group, PF group, PO group, subgroup in PO", which are not repeated herein.

It can be seen that in "case 1", since the PEI-O corresponds to the PO(s) in the PF, and *Nsg* subgroups are in the PO, the number of the bits of the PEI-PDCCH can be determined as *Nsg\*M.*

In addition, the cause for adding Y is that first indication information is common information, such as information related to a short message, TRS availability information, etc.

Example 3

Taking that the configuration information includes *Nsg, Y, M, N_pei, Ns,* and *N* as an example, determine the number of the bits of the PEI PDCCH as *Nsg\*Ns\*(N/N_pei),* in the case that the second condition of the number of the POs corresponding to the PEI or the second condition of the number of the PEIs is satisfied; or determine the number of the bits of the PEI PDCCH as *Y+Nsg\*Ns\*(N/N_pei),* in the case that the second condition of the number of the POs corresponding to the PEI or the second condition of the number of the PEIs is satisfied.

It may be noted that for the explanations of "the second condition of the number of the POs corresponding to the PEI" and "the second condition of the number of the PEIs", reference can be made to the content in the foregoing "(3) case 2", which are not repeated herein.

For "subgroup in PO", reference can be made to the content in "5. PEI group, PF group, PO group, subgroup in PO", which are not repeated herein.

It can be seen that in "case 2", since the PEI-O corresponds to the POs in the multiple PFs, the PEI corresponds to *N/N_pei* PFs, *Ns* POs are in the PF, and *Nsg* subgroups are in the PO, the number of the bits of the PEI-PDCCH can be determined as $Nsg*(Ns*(N/N\_pei))$.

In addition, the cause for adding Y is that first indication information is common information, such as information related to a short message, TRS availability information, etc.

3. How to determine a bit location of a terminal group (UE group) in the PEI PDCCH

It may be noted that explanations of some concepts used herein can be consistent with "1. how to determine the location of the PEI-O" above, such as configuration information, case 1, case 2, etc., which are not repeated.

In addition, the terminal group (UE group) may include a subgroup in a PO. For the explanation of the subgroup in the PO, reference can be made to the content in "5. PEI group, PF group, PO group, subgroup in PO", which are not repeated herein.

The following uses a terminal and a network device as an example for description.

Exemplarily, for the terminal, the terminal may obtain configuration information and determine a bit location of a subgroup in a PO in a PEI PDCCH according to the configuration information.

For the network device, the network device can send the configuration information, where the configuration information is used for determining the bit location of the subgroup in the PO in the PEI PDCCH.

The following describes how to determine the bit location of the subgroup in the PO in the PEI PDCCH according to the configuration information by means of examples.

Example 1

Taking that the configuration information includes at least one of: $Nsg, i\_s, i\_sg, Ns, N, i\_f,$ or $Y$ as an example, determine the bit location of the subgroup in the PO in the PEI PDCCH as $Nsg*i\_s+i\_sg$, or determine the bit location of the subgroup in the PO in the PEI PDCCH as $Y+Nsg*i\_s+i\_sg$, or determine the bit location of the UE subgroup in the PO in the PEI PDCCH as $Ns*Nsg*i\_f+Nsg*i\_s+i\_s$, or determine the bit location of the UE subgroup in the PO in the PEI PDCCH as $Y+Ns*Nsg*i\_f+Nsg*i\_s+i\_sg$.

It can be seen that if the terminal determines that the PEI-O corresponds to the PO(s) in the PF, $i\_s$ represents an index of the PO, and $i\_sg$ represents an index of the subgroup in the PO, the bit location of the UE subgroup in the PO in the PEI PDCCH can be determined as $Nsg*i\_s+i\_sg$.

If the terminal determines that the PEI-O corresponds to the multiple POs in the PF, $Ns$ POs are in the PF, $Nsg$ subgroups are in the PO, $i\_s$ represents the index of the PO group, and $i\_sg$ represents the index of the subgroup in the PO, the bit location of the UE subgroup in the PO in the PEI PDCCH can be determined as $Ns*Nsg*i\_f+ Nsg*i\_s + i\_sg$.

In addition, the cause for adding Y is that first indication information is common information, such as information related to a short message, TRS availability information, etc.

Furthermore, in example 1, $i\_f$ may satisfy: $i\_f = UE\ ID$ mod $(N/N\_pei)$.

It can be seen that $i\_f$ is equivalent to extract $\log2 (N/N\_pei)$ LSBs of $UE\_ID$. For example, when $N$ is 4 and $N\_pei$ is 2, $i\_f = UE\_ID$ mod 2, which is equivalent to extract 1 LSB, i.e., the lowest bit, of $UE\ ID$.

Furthermore, in example 1, $i\_sg$ can satisfy: $i\_sg =$ floor$(UE\_ID/N*Ns)$ mod $Nsg$.

It can be seen that $i\_sg$ is equivalent to first right shift $UE\ ID$ by $\log2(N*Ns)$ bits and extract $\log2 (Nsg)$ LSBs of $UE\_ID$. For example, when $N$ is 4, $Ns$ is 2, and $Nsg=2$, $i\_sg=$ floor$(UE\_ID/8)$ mod 2, which is equivalent to right shift $UE\ ID$ by 3 bits first and then extract 1 LSB, i.e., the 4th LSB to last, of $UE\_ID$.

Furthermore, in example 1, $i\_s$ can satisfy: $i\_s =$ floor$(UE\_ID/N)$ mod $Ns$.

It can be seen that $i\_s$ is equivalent to right shift $UE\ ID$ by $\log2(N)$ bits first and then extract $\log2 (Ns)$ LSBs of $UE\_ID$. For example, when $N$ is 4 and $Ns$ is 2, $i\_s = $ floor$(UE\_ID/4)$ mod 2, which is equivalent to right shift $UE\_ID$ by 2 bits first and then extract 1 LSB, i.e., the 3rd LSB to last, of $UE\ ID$.

Example 2

Taking that the configuration information includes $Nsg, i\_s, i\_sg,$ and $Y$ as an example, determine the bit location of the subgroup in the PO in the PEI PDCCH as $Nsg*i\_s+i\_sg$, in the case that the first condition of the number of the POs corresponding to the PEI or the first condition of the number of the PEIs is satisfied; or determine the bit location of the subgroup in the PO in the PEI PDCCH as $Y+Nsg*i\_s+i\_sg$, in the case that the first condition of the number of the POs corresponding to the PEI or the first condition of the number of the PEIs is satisfied.

As can be seen, in "case 1", since the PEI-O corresponds to the PO(s) in the PF, $i\_s$ represents the index of the PO, and $i\_sg$ represents the index of the subgroup in the PO, the bit location of the UE subgroup in the PO in the PEI PDCCH can be determined as $Nsg*i\_s+i\_sg$.

In addition, the cause for adding Y is that first indication information is common information, such as information related to a short message, TRS availability information, etc.

Furthermore, in example 2, *i_sg* may satisfy: *i_sg* = floor(*UE_ID/N\*Ns*) mod *Nsg.*

It can be seen that *i_sg* is equivalent to right shift *UE_ID* by log2(N\**Ns*) bits first and then extract log2 (*Nsg*) LSBs of *UE_ID.* For example, when *N* is 4, *Ns* is 2, and *Nsg*=2, *i_sg*= floor(*UE_ID*/8) mod 2, which is equivalent to right shift *UE ID* by 3 bits first and then extract 1 LSB, i.e., the 4th LSB to last, of *UE_ID.*

Furthermore, in example 2, *i_s* may satisfy: *i_s* = floor(*UE_ID/N*) mod *Ns.*

It can be seen that *i_s* is equivalent to right shift *UE ID* by log2(N) bits first and then extract log2 (*Ns*) LSBs of *UE ID.* For example, when *N* is 4 and *Ns* is 2, *i_s = floor*(*UE_ID*/4) mod 2, which is equivalent to right shift *UE_ID* by 2 bits first and then extract 1, i.e., the 3rd LSB to last, of *UE_ID.*

Example 3

Taking that the configuration information includes at least one of: *Nsg, i_s, i_sg, Ns, i_f, Y,* or *N* as an example, determine the bit location of the UE subgroup in the PO in the PEI PDCCH as *Ns\*Nsg\*i_f+Nsg\*i_s+i_s,* in the case that the second condition of the number of the POs corresponding to the PEI or the second condition of the number of the PEIs is satisfied; or determine the bit location of the UE subgroup in the PO in the PEI PDCCH as *Y+Ns\*Nsg\*i_f+Nsg\*i_s+i_sg,* in the case that the second condition of the number of the POs corresponding to the PEI or the second condition of the number of the PEIs is satisfied.

As can be seen, in "case 2", since the PEI-O corresponds to the POs in the multiple PFs, *Ns* POs are in the PF, *Nsg* subgroups are in the PO, *i_s* represents the index of the PO group, and *i_sg* represents the index of the subgroup in the PO, the bit location of the UE subgroup in the PO in the PEI PDCCH can be determined as *Ns\*Nsg\*i_f+Nsg\*i_s+i_sg.*

In addition, the cause for adding Y is that first indication information is common information, such as information related to a short message, TRS availability information, etc.

Furthermore, in example 3, *i_f* may satisfy: *i_f = UE_ID* mod (*N/N_pei*).

It can be seen that *i_f* is equivalent to extract log2 (*N/N_pei*) LSBs of *UE_ID.* For example, when *N* is 4 and *N_pei* is 2, *i_f = UE_ID* mod 2, which is equivalent to extract 1 LSB, i.e., the lowest bit, of *UE ID.*

Furthermore, in example 3, *i_sg* may satisfy: *i_sg* = floor(*UE_ID/N\*Ns*) mod *Nsg.*

It can be seen that *i_sg* is equivalent to right shift *UE_ID* by log2(*N\*Ns*) bits first and then extract log2 (*Nsg*) LSBs of *UE_ID.* For example, when *N* is 4, *Ns* is 2, and *Nsg*=2, *i_sg*= floor(*UE_ID*/8) mod 2, which is equivalent to right shift *UE_ID* by 3 bits first and then extract 1 LSB, the 4th LSB to last, of *UE_ID.*

Furthermore, in example 3, *i_s* may satisfy: *i_s* = floor(*UE_ID/N*) mod *Ns.*

It can be seen that *i_s* is equivalent to right shift *UE ID* by log2(*N*) bits first and then extract log2 (*Ns*) LSBs of *UE ID.* For example, when *N* is 4 and *Ns* is 2, *i_s = floor*(*UE_ID*/4) mod 2, which is equivalent to right shift *UE_ID* by 2 bits first and then extract 1 LSB, i.e., the 3rd LSB to last, of *UE ID.*

In summary, the following takes that the terminal determines the location of the PEI-O as an example to describe a method for a PEI according to embodiments of the disclosure.

As illustrated in FIG. 2, where FIG. 2 is a schematic flowchart illustrating a method a method for a PEI according to embodiments of the disclosure, specifically, the method includes the following.

S210, determine a location of a PEI-O.

It may be noted that for details on how to determine the location of the PEI-O, refer to the content in "1. how to determine a location of a PEI-O" and other related contents above, which are not repeated herein.

It can be seen that determining the location of the PEI-O facilitates implementation of the design of the PEI-O.

The following describes a method for a PEI according to embodiments of the disclosure by taking an example that the terminal determines that the PEI-O corresponds to a PO(s) in a PF or that the PEI-O corresponds to POs in multiple PFs.

As illustrated in FIG. 3, where FIG. 3 a schematic flowchart illustrating a method for a PEI according to another embodiment of the disclosure, specifically, the method includes the following.

S310, determine that a PEI-O corresponds to a PO in a PF, or determine that the PEI-O corresponds to POs in multiple PFs.

It may be noted that for how to determine that the PEI-O corresponds to the PO(s) in the PF or the PEI-O corresponds to the multiple PFs, reference can be made to the content in "6) how to distinguish case 1 from case 2" and other related contents above, which are not repeated herein.

It can be seen that determining that the PEI-O corresponds to the PO(s) in the PF or the PEI-O corresponds to the multiple PFs facilitates implementation of the design of the PEI-O.

The following describes a method for a PEI according to embodiments of the disclosure by taking an example that the terminal determines the number of bits of a PEI PDCCH.

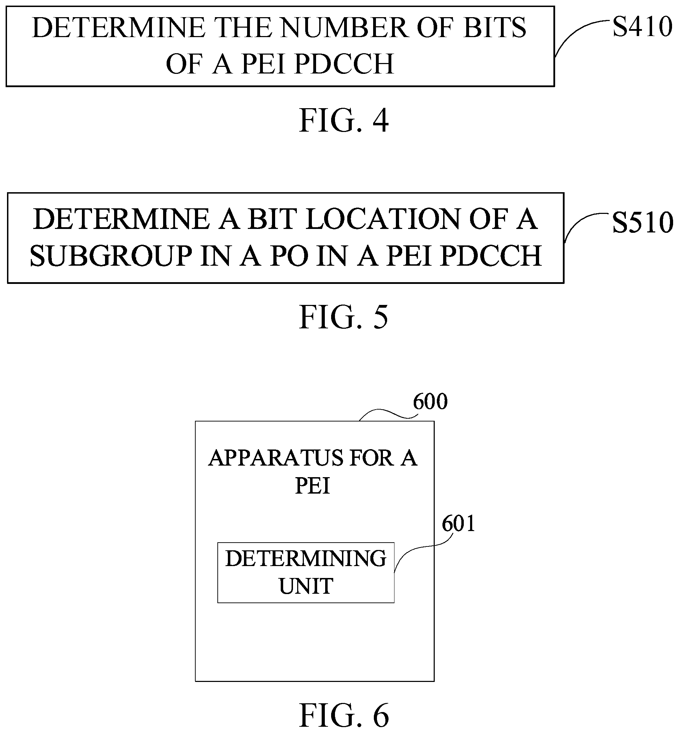

As illustrated in FIG. 4, where FIG. 4 is a schematic flowchart illustrating a method for a PEI according to another embodiment of the disclosure, specifically, the method includes the following.

S410, determine the number of bits of a PEI PDCCH.

It may be noted that for details of how to determine the number of the bits of the PEI PDCCH, reference can be made to the content in "2. how to determine the number of bits of the PEI PDCCH" and other related contents above, which are not repeated herein.

It can be seen that determining the number of the bits of the PEI PDCCH facilitates implementation of the design of the PEI-O.

The following describes a method for a PEI according to embodiments of the disclosure by taking an example that the terminal determines a bit location of a subgroup in a PO in a PEI PDCCH.

As illustrated in FIG. 5, where FIG. 5 is a schematic flowchart illustrating a method for a PEI according to another embodiment of the disclosure, specifically, the method includes the following.

S510, determine a bit location of a subgroup in a PO in a PEI PDCCH.

It may be noted that for details of how to determine the bit location of the subgroup in the PO in the PEI PDCCH, reference can be made to the content in "3. how to determine the bit location of the terminal group (UE group) in the PEI PDCCH" and other related contents above, which are not repeated herein.

It can be seen that determining the bit location of the subgroup in the PO in the PEI PDCCH facilitates implementation of the design of the PEI-O.

The foregoing solutions of embodiments of the disclosure are mainly described from the viewpoint of the method side. It can be understood that, in order to implement the above functions, the terminal or the network device includes hardware structures and/or software modules for performing the respective functions. Those skilled in the art may readily recognize that, in combination with the units and algorithmic operations of various examples described in the embodiments disclosed herein, the disclosure can be implemented in hardware or a combination of the hardware and computer software. Whether a function is implemented by way of the hardware or hardware driven by the computer software depends on the particular application and design constraints of the technical solution. Those skilled in the art may use different methods to implement the described functions for each particular application, but such implementation may not be considered as beyond the scope of the disclosure.

According to embodiments of the disclosure, functional units may be divided for the terminal or the network device in accordance with the foregoing method examples. For example, each functional unit may be divided according to each function, and two or more functions may be integrated in one processing unit. The above-mentioned integrated unit can be implemented in the form of hardware or software program modules. It should be noted that the division of units in embodiments of the disclosure is schematic, and is merely a logical function division, and there may be other division manners in actual implementation.

In the case of the integrated unit, FIG. 6 is a block diagram illustrating functional units of an apparatus for a PEI according to embodiments of the disclosure. The apparatus 600 for a PEI includes a determining unit 601.

It may be noted that the determining unit 601 may be a module unit configured to deal with a signal, data, information, etc., which is not specifically limited herein.

The apparatus 600 for a PEI may further include an obtaining unit. The obtaining unit may be a module unit configured to transmit and receive a signal, data, information, etc. In addition, the obtaining unit may be a communication unit, and the communication unit may be a communication interface, a transceiver, a transceiver circuit, etc.

The apparatus 600 for a PEI may further include a storage unit. The storage unit is configured to store computer program codes or instructions executed by the apparatus 600 for a PEI. The storage unit may be a memory.

In addition, it may be noted that the apparatus 600 for a PEI may be a chip or a chip module.

The determining unit 601 may be integrated into a unit. For example, the determining unit 601 may be integrated into a processing unit. The processing unit may be a processor or a controller, for example, a central processing unit (CPU), a general-purpose processor, a digital signal processor (DSP), an application-specific integrated circuit (ASIC), a field programmable gate array (FPGA), or other programmable logic devices, transistor logic devices, hardware components, or a combination thereof. Various exemplary logic blocks, modules, and circuits disclosed in the disclosure can be implemented or executed. The processing unit may also be a combination for implementing computing functions, for example, one or more microprocessors, a combination of DSP and microprocessor, or the like.

In specific implementation, the determining unit 601 is configured to perform any one operation in the above method embodiments, and selectively invoke the obtaining unit to complete corresponding operations when performing data transmission such as sending. The following provides detailed description.

The determining unit 601 is configured to determine a location of a PEI-O.

It may be noted that for specific implementation of each operation in the embodiments illustrated in FIG. 6, reference can be made to the description of the method embodiments above, which is not repeated herein.

Specifically, the determining unit 601 configured to determine the location of the PEI-O is configured to determine a location of a PEI-F according to a frame offset.

Specifically, the determining unit 601 configured to determine the location of the PEI-F according to the frame offset is configured to determine the location of the PEI-F according to the frame offset and *UE ID.*

Specifically, a frame number *SFN_pei* of the PEI-F is determined by at least one of a frame offset *PEI_offset,*

a DRX cycle $T$, the number $N$ of PFs in $T$, a frame number $SFN$ of a PF of a target PO, the number $N\_pei$ of PEIs in $T$, an index $i\_pei$ of a PEI of the target PO in $T$, the number $Ns$ of POs per PF, the number $M$ of POs corresponding to a PEI, or an index $i\_f$ of the PF of the target PO in the PEI.

Specifically, $SFN\_pei$ satisfies: $(SFN\_pei+PEI\_offset)$ mod $T = (T/N)*(UE\_ID$ mod N$)$, where mod represents a modulo operation.

Specifically, the frame number $SFN\_pei$ of the PEI-F is determined by the frame number $SFN$ of the PF of the target PO, and the frame offset $PEI\_offset$.

Specifically, $SFN\_pei$ satisfies: $SFN\_pei = SFN-PEI\_offset$.

Specifically, $SFN\_pei$ satisfies a first condition of the number of POs corresponding to a PEI or a first condition of the number of PEIs.

Specifically, the frame number $SFN\_pei$ of the PEI-F is determined by at least one of the frame offset $PEI\_offset$, the DRX cycle $T$, the number $N\_pei$ of PEIs in $T$, or the index $i\_pei$ of the PEI of the target PO in $T$.

Specifically, $SFN\_pei$ satisfies: $(SFN\_pei+PEI\_offset)$ mod $T = (T/N\_pei)*i\_pei$.

Specifically, $i\_pei$ satisfies: $i\_pei$=floor$((UE\_ID$ mod $N)/(N/N\_pei))$; or $i\_pei$=floor$(UE\_ID/(N/N\_pei))$ mod $N\_pei$; or $i\_pei$=floor$(\max(UE\_ID/N, UE\_ID*Ns/M))$ mod $N\_pei$.

Specifically, $N\_pei$ satisfies: $N\_pei$=max$(1, (Ns/M)*N)$.

Specifically, the frame number $SFN\_pei$ of the PEI-F is determined by the frame number $SFN$ of the PF of the target PO, the index $i\_f$ of the PF of the target PO in the PEI, and a frame offset $PEI\_offset(i\_f)$ related to $i\_f$.

Specifically, $SFN\_pei$ satisfies: $SFN\_pei = SFN-PEI\_offset(i\_f)$.

Specifically, the frame number $SFN\_pei$ of the PEI-F is determined by at least one of $UE\_ID$, the DXR cycle $T$, the number $N$ of the PFs in $T$, the index $i\_f$ of the PF of the target PO in the PEI, or the frame offset $PEI\_offset(i\_f)$ related to $i\_f$.

Specifically, $SFN\_pei$ satisfies: $(SFN\_pei+PEI\_offset(i\_f))$ mod $T = (T/N)*UE\_ID$ mod $N$.

Specifically, $SFN\_pei$ satisfies a second condition of the number of POs corresponding to a PEI or a second condition of the number of PEIs.

Specifically, $PEI\_offset(i\_f)$ satisfies: $PEI\_offset(i\_f)$=frame_offset+$i\_f*(T/N)$, where $frame\_offset$ represents a frame offset independent of $i\_f$.

Specifically, the determining unit 601 configured to determine the location of the PEI-O is configured to determine a start location of the PEI-O according to a symbol offset, where the symbol offset is a symbol offset of the start location of the PEI-O relative to a start location of a PEI-F.

Specifically, the symbol offset is determined by a symbol offset index.

Specifically, the symbol offset index is equal to foor$(i\_s/M)$, where $i\_s$ represents an index of the target PO in a PF, and $M$ represents the number of POs corresponding to a PEI.

Specifically, the symbol offset index is 0.

Specifically, the determining unit 601 configured to determine the location of the PEI-O is configured to determine a start location of the PEI-O according to a reference time and an offset.

Specifically, the reference time is a start location of a PO corresponding to a PEI.

Specifically, the PO corresponding to the PEI is a first PO in a first PF corresponding to the PEI.

Specifically, an index $i\_pf\_ref$ of the first PF corresponding to the PEI is determined by at least one of: an index $i\_pf$ of the PF of the target PO in the DRX cycle $T$, the number $Ns$ of the POs per PF, or the number $M$ of the POs corresponding to the PEI.

Specifically, $i\_pf\_ref$ satisfies: $i\_pf\_ref$=$i\_pf$.

Specifically, $i\_pf\_ref$ satisfies: $i\_pf\_ref$=floor$(i\_pf/(M/Ns))*M/Ns$.

Specifically, an index $i\_s\_ref$ of the first PO in the first PF corresponding to the PEI is determined by at least one of: the index $i\_s$ of the target PO in the PF, the number $M$ of the POs corresponding to the PEI, or the number $Ns$ of the POs per PF.

Specifically, $i\_s\_ref$ satisfies: $i\_s\_ref$=floor$(i\_s/M)*(Ns/M)$.

Specifically, the index of the first PO in the first PF corresponding to the PEI is 0.

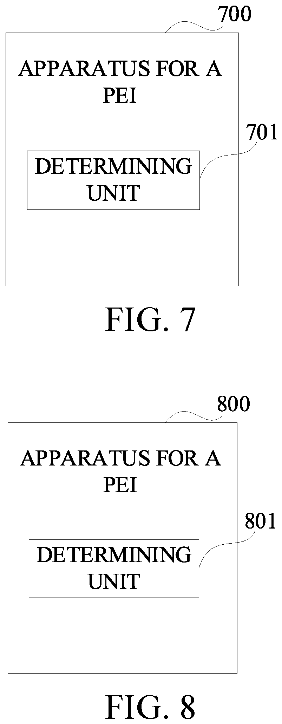

In the case of the integrated unit, FIG. 7 is a block diagram illustrating functional units of an apparatus for a PEI according to another embodiment of the disclosure. The apparatus 700 for a PEI includes a determining unit 701.

It may be noted that the determining unit 701 may be a module unit configured to deal with a signal, data, information, etc., which is not specifically limited herein.

The apparatus 700 for a PEI may further include an obtaining unit. The obtaining unit may be a module unit configured to transmit and receive a signal, data, information, etc. In addition, the obtaining unit may be a communication unit, and the communication unit may be a communication interface, a transceiver, a transceiver circuit, etc.

The apparatus 700 for a PEI may further include a storage unit. The storage unit is configured to store computer program codes or instructions executed by the apparatus 700 for a PEI. The storage unit may be a memory.

In addition, it may be noted that the apparatus 700 for a PEI may be a chip or a chip module.

The determining unit 701 may be integrated into a unit. For example, the determining unit 701 may be integrated into a processing unit. The processing unit may be a processor or a controller, for example, a CPU, a general-purpose processor, a DSP, an ASIC, an FPGA, or other programmable logic devices, transistor logic devices, hardware components, or a combination thereof. Various exemplary logic blocks, modules, and circuits disclosed in the disclosure can be implemented or executed. The processing unit may also be a combination for implementing computing functions, for example, one or more microprocessors, a combination of DSP and microprocessor, or the like.

In specific implementation, the determining unit 701 is configured to perform any one operation in the above method embodiments, and selectively invoke the obtaining unit to complete corresponding operations when performing data transmission such as sending. The following provides detailed description.

The determining unit 701 is configured to determine that a PEI-O corresponds to a PO in a PF or determine that the PEI-O corresponds to POs in multiple PFs.

It may be noted that for specific implementation of each operation in the embodiments illustrated in FIG. 7, reference can be made to the description of the method embodiments above, which is not repeated herein.

Specifically, the determining unit 701 configured to determine that the PEI-O corresponds to the PO in the PF is configured to determine that the PEI-O corresponds to the PO in the PF, in the case that a first condition of the number of POs corresponding to a PEI or a first condition of the number of PEIs is satisfied.

Specifically, the determining unit 701 configured to determine that the PEI-O corresponds to the POs in the multiple PFs is configured to determine that the PEI-O corresponds to the POs in the multiple PFs, in the case that a second condition of the number of POs corresponding to a PEI or a second condition of the number of PEIs is satisfied.

In the case of the integrated unit, FIG. 8 is a block diagram illustrating functional units of an apparatus for a PEI according to another embodiment of the disclosure. The apparatus 800 for a PEI includes a determining unit 801.

It may be noted that the determining unit 801 may be a module unit configured to deal with a signal, data, information, etc., which is not specifically limited herein.

The apparatus 800 for a PEI may further include an obtaining unit. The obtaining unit may be a module unit configured to transmit and receive a signal, data, information, etc. In addition, the obtaining unit may be a communication unit, and the communication unit may be a communication interface, a transceiver, a transceiver circuit, etc.

The apparatus 800 for a PEI may further include a storage unit. The storage unit is configured to store computer program codes or instructions executed by the apparatus 800 for a PEI. The storage unit may be a memory.

In addition, it may be noted that the apparatus 800 for a PEI may be a chip or a chip module.

The determining unit 801 may be integrated into a unit. For example, the determining unit 801 may be integrated into a processing unit. The processing unit may be a processor or a controller, for example, a CPU, a general-purpose processor, a DSP, an ASIC, an FPGA, or other programmable logic devices, transistor logic devices, hardware components, or a combination thereof. Various exemplary logic blocks, modules, and circuits disclosed in the disclosure can be implemented or executed. The processing unit may also be a combination for implementing computing functions, for example, one or more microprocessors, a combination of DSP and microprocessor, or the like.

In specific implementation, the determining unit 801 is configured to perform any one operation in the above method embodiments, and selectively invoke the obtaining unit to complete corresponding operations when performing data transmission such as sending. The following provides detailed description.

The determining unit 801 is determine the number of bits of a PEI PDCCH.

It may be noted that for specific implementation of each operation in the embodiments illustrated in FIG. 8, reference can be made to the description of the method embodiments above, which is not repeated herein.

Specifically, the determining unit 801 configured to determine the number of the bits of the PEI PDCCH is configured to determine the number of the bits of the PEI PDCCH according to the number $Nsg$ of subgroups in a PO and the number $M$ of POs corresponding to a PEI.

Specifically, the determining unit 801 configured to determine the number of the bits of the PEI PDCCH according to the number $Nsg$ of the subgroups in the PO and the number $M$ of the POs corresponding to the PEI is configured to: determine the number of the bits of the PEI PDCCH as $Nsg*M$; or determine the number of the bits of the PEI PDCCH as $Nsg*M$, in the case that a first condition of the number of POs corresponding to a PEI or a first condition of the number of PEIs is satisfied.

Specifically, the determining unit 801 configured to determine the number of the bits of the PEI PDCCH is configured to determine the number of the bits of the PEI PDCCH according to the number $Y$ of bits of first indication information, the number $Nsg$ of the subgroups in a PO, and the number $M$ of the POs corresponding to a PEI.

Specifically, the determining unit 801 configured to determine the number of the bits of the PEI PDCCH according to the number $Y$ of the bits of the first indication information, the number $Nsg$ of the subgroups in the PO, and the number $M$ of the POs corresponding to the PEI is configured to: determine the number of the bits of the PEI PDCCH as $Y+Nsg*M$, or determine the number of the bits of the PEI PDCCH as $Y+Nsg*M$, in the case that the first condition of the number of the POs corresponding to the PEI or the first condition of the number of the PEIs is satisfied.

Specifically, the determining unit 801 configured to determine the number of the bits of the PEI PDCCH is configured to determine the number of the bits of the PEI PDCCH according to the number $Nsg$ of the subgroups in the PO, the number $Ns$ of POs per PF, the number $N$ of PFs in a DRX cycle $T,$ and the number $N\_pei$ of PEIs in $T.$

Specifically, the determining unit 801 configured to determine the number of the bits of the PEI PDCCH according to the number $Nsg$ of the subgroups in the PO, the number $Ns$ of the POs per PF, the number $N$ of the PFs in the DRX cycle $T,$ and the number $N\_pei$ of the PEIs in $T$ is configured to: determine the number of the bits of the PEI PDCCH as $Nsg*Ns*(N/N\_pei)$; or determine the number of the bits of the PEI PDCCH as $Nsg*Ns*(N/N\_pei)$, in the case that a second condition of the number of POs corresponding to a PEI or a second condition of the number of PEIs is satisfied.

Specifically, the determining unit 801 configured to determine the number of the bits of the PEI PDCCH is configured to determine the number of the bits of the PEI PDCCH according to the number $Y$ of the bits of the first indication information, the number $Nsg$ of the subgroups in the PO, the number $Ns$ of the POs per PF, the number $N$ of the PFs in the DRX cycle $T,$ and the number $N\_pei$ of the PEIs in $T.$

Specifically, the determining unit 801 configured to determine the number of the bits of the PEI PDCCH according to the number $Y$ of the bits of the first indication information, the number $Nsg$ of the subgroups in the PO, the number $Ns$ of the POs per PF, the number $N$ of the PFs in the DRX cycle $T,$ and the number $N\_pei$ of the PEIs in $T$ is configured to: determine the number of the bits of the PEI PDCCH as $Y+Nsg*Ns*(N/N\_pei)$; or determine the number of the bits of the PEI PDCCH as $Y+Nsg*Ns*(N/N\_pei)$, in the case that the second condition of the number of the POs corresponding to the PEI or the second condition of the number of the PEIs is satisfied.

Specifically, the determining unit 801 configured to determine the number of the bits of the PEI PDCCH is configured to: determine the number of the bits of the PEI PDCCH as $Nsg*M,$ or determine the number of the bits of the PEI PDCCH as $Y+Nsg*M,$ or determine the number of the bits of the PEI PDCCH as $Nsg*Ns*(N/N\_pei)$, or determine the number of the bits of the PEI PDCCH as $Y+Nsg*Ns*(N/N\_pei)$. $Y$ represents the number of bits of first indication information, $Nsg$ represents the number of subgroups in a PO, $M$ represents the number of POs corresponding to a PEI, $N\_pei$ represents the number of PEIs in a DRX cycle $T,$ $N$ represents the number of PFs in $T,$ and $Ns$ represents the number of POs in a PF.

Specifically, the determining unit 801 configured to determine the number of the bits of the PEI PDCCH is configured to: determine the number of the bits of the PEI PDCCH as $Nsg*M,$ in the case that the first condition of the number of the POs corresponding to the PEI or the first condition of the number of the PEIs is satisfied; or determine the number of the bits of the PEI PDCCH as $Y+Nsg*M,$ in the case that the first condition of the number of the POs corresponding to the PEI or the first condition of the number of the PEIs is satisfied. $Y$ represents the number of bits of first indication information, $Nsg$ represents the number of subgroups in a PO, and $M$ represents the number of POs corresponding to a PEI.

Specifically, the determining unit 801 configured to determine the number of the bits of the PEI PDCCH is configured to: determine the number of the bits of the PEI PDCCH as $Nsg*Ns*(N/N\_pei)$, in the case that the second condition of the number of the POs corresponding to the PEI or the second condition of the number of the PEIs is satisfied; or determine the number of the bits of the PEI PDCCH as $Y+Nsg*Ns*(N/N\_pei)$, in the case that the second condition of the number of the POs corresponding to the PEI or the second condition of the number of the PEIs is satisfied. $Y$ represents the number of bits of first indication information, $Nsg$ represents the number of subgroups in a PO, $N\_pei$ represents the number of PEIs in a DRX cycle $T,$ $N$ represents the number of PFs in $T,$ and $Ns$ represents the number of POs in a PF.

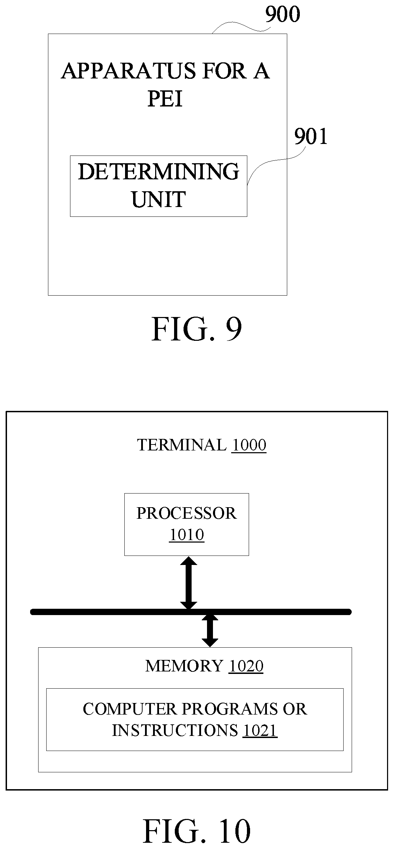

In the case of the integrated unit, FIG. 9 is a block diagram illustrating functional units of an apparatus for a PEI according to another embodiment of the disclosure. The apparatus 900 for a PEI includes a determining unit 901.

It may be noted that the determining unit 901 may be a module unit configured to deal with a signal, data, information, etc., which is not specifically limited herein.

The apparatus 900 for a PEI may further include an obtaining unit. The obtaining unit may be a module unit configured to transmit and receive a signal, data, information, etc. In addition, the obtaining unit may be a communication unit, and the communication unit may be a communication interface, a transceiver, a transceiver circuit, etc.

The apparatus 900 for a PEI may further include a storage unit. The storage unit is configured to store computer program codes or instructions executed by the apparatus 900 for a PEI. The storage unit may be a memory.

In addition, it may be noted that the apparatus 900 for a PEI may be a chip or a chip module.

The determining unit 901 may be integrated into a unit. For example, the determining unit 901 may be integrated into a processing unit. The processing unit may be a processor or a controller, for example, a CPU, a general-purpose processor, a DSP, an ASIC, an FPGA, or other programmable logic devices, transistor logic devices, hardware components, or a combination thereof. Various exemplary logic blocks, modules, and circuits disclosed in the disclosure can be implemented or executed. The processing unit may also be a combination for implementing computing functions, for example, one or more microprocessors, a combination of DSP and microprocessor, or the like.

In specific implementation, the determining unit 901 is configured to perform any one operation in the above method embodiments, and selectively invoke the obtaining unit to complete corresponding operations when performing data transmission such as sending. The following provides detailed description.

The determining unit 901 is determine a bit location of a subgroup in a PO in a PEI PDCCH.

It may be noted that for specific implementation of each operation in the embodiments illustrated in FIG. 9, reference can be made to the description of the method embodiments above, which is not repeated herein.

Specifically, the determining unit 901 configured to determine the bit location of the subgroup in the PO in the PEI PDCCH is configured to determine the bit location of the subgroup in the PO in the PEI PDCCH according to the number $Nsg$ of subgroups in the PO, an index $i\_s$ of a target PO in a PF, and an index $i\_sg$ of a subgroup in the target PO.

Specifically, the determining unit 901 configured to determine the bit location of the subgroup in the PO in the PEI PDCCH according to the number $Nsg$ of the subgroups in the PO, the index $i\_s$ of the target PO in the PF, and the index $i\_sg$ of the subgroup in the target PO is configured to: determine the bit location of the subgroup in the PO in the PEI PDCCH as $Nsg*i\_s+i\_sg$; or determine the bit location of the subgroup in the PO in the PEI PDCCH as $Nsg*i\_s+i\_sg$, in the case that a first condition of the number of POs corresponding to a PEI or a first condition of the number of PEIs is satisfied.

Specifically, the determining unit 901 configured to determine the bit location of the subgroup in the PO in the PEI PDCCH is configured to determine the bit location of the subgroup in the PO in the PEI PDCCH according to the number $Y$ of bits of first indication information, the number $Nsg$ of subgroups in the PO, an index $i\_s$ of a target PO in a PF, and an index $i\_sg$ of a subgroup in the target PO.

Specifically, the determining unit 901 configured to determine the bit location of the subgroup in the PO in the PEI PDCCH according to the number $Y$ of the bits of the first indication information, the number $Nsg$ of the subgroups in the PO, the index $i\_s$ of the target PO in the PF, and the index $i\_sg$ of the subgroup in the target PO is configured to: determine the bit location of the subgroup in the PO in the PEI PDCCH as $Y+Nsg*i\_s+i\_sg$; or determine the bit location of the subgroup in the PO in the PEI PDCCH as $Y+Nsg*i\_s+i\_sg$, in the case that the first condition of the number of the POs corresponding to the PEI or the first condition of the number of the PEIs is satisfied.

Specifically, the determining unit 901 configured to determine the bit location of the subgroup in the PO in the PEI PDCCH is configured to determine the bit location of the subgroup in the PO in the PEI PDCCH according to the number $Nsg$ of the subgroups in the PO, the index $i\_s$ of the target PO in the PF, the index $i\_sg$ of the subgroup in the target PO, the number $Ns$ of POs per PF, and an index $i\_f$ of a PF of the target PO in a PEI.

Specifically, the determining unit 901 configured to determine the bit location of the subgroup in the PO in the PEI PDCCH according to the number $Nsg$ of the subgroups in the PO, the index $i\_s$ of the target PO in the PF, the index $i\_sg$ of the subgroup in the target PO, the number $Ns$ of the POs per PF, and the index $i\_f$ of the PF of the target PO in the PEI is configured to: determine the bit location of the UE subgroup in the PO in the PEI PDCCH as $Ns*Nsg*i\_f+Nsg*i\_s+i\_s$; or determine the bit location of the UE subgroup in the PO in the PEI PDCCH as $Ns*Nsg*i\_f+Nsg*i\_s+i\_s$, in the case that a second condition of the number of POs corresponding to a PEI or a second condition of the number of PEIs is satisfied.

Specifically, the determining unit 901 configured to determine the bit location of the subgroup in the PO in the PEI PDCCH is configured to determine the bit location of the subgroup in the PO in the PEI PDCCH according to the number $Y$ of the bits of the first indication information, the number $Nsg$ of the subgroups in the PO, the index $i\_s$ of the target PO in the PF, the index $i\_sg$ of the subgroup in the target PO, the number $Ns$ of the POs per PF, and the index $i\_f$ of the PF of the target PO in the PEI.

Specifically, the determining unit 901 configured to determine the bit location of the subgroup in the PO in the PEI PDCCH according to the number $Y$ of the bits of the first indication information, the number $Nsg$ of the subgroups in the PO, the index $i\_s$ of the target PO in the PF, the index $i\_sg$ of the subgroup in the target PO, the number $Ns$ of the POs per PF, and the index $i\_f$ of the PF of the target PO in the PEI is configured to: determine the bit location of the UE subgroup in the PO in the PEI PDCCH as $Y+Ns*Nsg*i\_f+Nsg*i\_s+i\_sg$; or determine the bit location of the UE subgroup in the PO in the PEI PDCCH as $Y+Ns*Nsg*i\_f+Nsg*i\_s+i\_sg$, in the case that the second condition of the number of the POs corresponding to the PEI or the second condition of the number of the PEIs is satisfied.

Specifically, the determining unit 901 configured to determine the bit location of the subgroup in the PO in the PEI PDCCH is configured to: determine the bit location of the subgroup in the PO in the PEI PDCCH as $Nsg*i\_s+i\_sg$, or determine the bit location of the subgroup in the PO in the PEI PDCCH as $Y+Nsg*i\_s+i\_sg$, or determine the bit location of the UE subgroup in the PO in the PEI PDCCH as $Ns*Nsg*i\_f+Nsg*i\_s+i\_s$, or determine the bit location of the UE subgroup in the PO in the PEI PDCCH as $Y+Ns*Nsg*i\_f+Nsg*i\_s+i\_sg$. $Y$ represents the number of bits of first indication information, $Nsg$ represents the number of subgroups in a PO, $i\_s$ represents an index of the target PO in a PF, $i\_sg$ represents an index of a subgroup in the target PO, $Ns$ represents the number of POs in the PF, and $i\_f$ represents an index of a PF of the target PO in a PEI.

Specifically, the determining unit 901 configured to determine the bit location of the subgroup in the PO in the PEI PDCCH is configured to: determine the bit location of the subgroup in the PO in the PEI PDCCH as $Nsg*i\_s+i\_sg$, in the case that the first condition of the number of the POs corresponding to the PEI or the first condition of the number of the PEIs is satisfied; or determine the bit location of the subgroup in the PO in the PEI PDCCH as $Y+Nsg*i\_s+i\_sg$, in the case that the first condition of the number of the POs corresponding to the PEI or the first condition of the number of the PEIs is satisfied. *Y* represents the number of bits of first indication information, *Nsg* represents the number of subgroups in a PO, *i_s* represents an index of the target PO in a PF, and *i_sg* represents an index of a subgroup in the target PO.

Specifically, the determining unit 901 configured to determine the bit location of the subgroup in the PO in the PEI PDCCH is configured to: determine the bit location of the UE subgroup in the PO in the PEI PDCCH as $Ns*Nsg*i\_f+Nsg*i\_s+i\_s$, in the case that the second condition of the number of the POs corresponding to the PEI or the second condition of the number of the PEIs is satisfied; or determine the bit location of the UE subgroup in the PO in the PEI PDCCH as $Y+Ns*Nsg*i\_f+Nsg*i\_s+i\_sg$, in the case that the second condition of the number of the POs corresponding to the PEI or the second condition of the number of the PEIs is satisfied. *Y* represents the number of bits of first indication information, *Ns* represents the number of POs in the PF, *Nsg* represents the number of subgroups in a PO, *i_f* represents an index of a PF of the target PO in a PEI, *i_s* represents an index of the target PO in a PF, and *i_sg* represents an index of a subgroup in the target PO,.

Specifically, *i_f* is determined according to at least one of: a terminal index *UE_ID,* the number *N* of PFs in the DRX cycle *T,* or the number *N_pei* of PEIs in *T*.

Specifically, *i_f* satisfies: $i\_f = UE\_ID \bmod (N/N\_pei)$.

Specifically, *i_sg* is determined according to at least one of a terminal index *UE_ID,* the number *N* of PFs in the DRX cycle *T, Ns,* or *Nsg*.

Specifically, *i_sg* satisfies: $i\_sg = \mathrm{floor}(UE\_ID/N*Ns) \bmod Nsg$.

Specifically, *i_s* is determined according to at least one of a terminal index *UE ID* and the number *N* of PFs in the DRX cycle *T*.

Specifically, *i_s* satisfies: $i\_s = \mathrm{floor}(UE\_ID/N) \bmod Ns$.

Refer to FIG. 10, where FIG. 10 is a schematic structural diagram illustrating a terminal according to embodiments of the disclosure. The terminal 1000 includes a processor 1010, a memory 1020, and a communication bus configured to connect the processor 1010 with the memory 1020.

The memory 1020 includes, but is not limited to, a random access memory (RAM), a read-only memory (ROM), an erasable programmable ROM (EPROM), or a compact disc (CD)-ROM. The memory 1020 is configured to store program codes executed by the terminal 1000 and data transmitted by the terminal 1000.

The terminal 1000 further includes a communication interface, where the communication interface is configured to receive and send data.

The processor 1010 may be one or more CPUs. In the case that the processor 1010 is a CPU, the CPU may be implemented as a single-core CPU or multi-core CPU.

The processor 1010 of the terminal 1000 is configured to execute computer programs or instructions 1021 stored in the memory 1020 to determine a location of a PEI-O.

It may be noted that for specific implementation of each operation, reference can be made to the corresponding description of the above method embodiments. The terminal 1000 may be configured to perform the above method embodiments of the disclosure, which is not repeated.

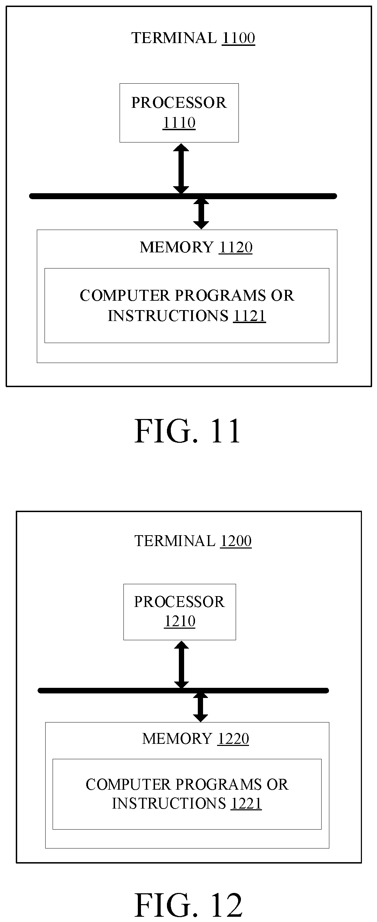

Refer to FIG. 11, where FIG. 11 is a schematic structural diagram illustrating a terminal according to another embodiment of the disclosure. The terminal 1100 includes a processor 1110, a memory 1120, and a communication bus configured to connect the processor 1110 with the memory 1120.

The memory 1120 includes, but is not limited to, an RAM, an ROM, an EPROM, or a CD-ROM. The memory 1120 is configured to store program codes executed by the terminal 1100 and data transmitted by the terminal 1100.

The terminal 1100 further includes a communication interface, where the communication interface is configured to receive and send data.

The processor 1110 may be one or more CPUs. In the case that the processor 1110 is a CPU, the CPU may be implemented as a single-core CPU or multi-core CPU.

The processor 1110 of the terminal 1100 is configured to execute computer programs or instructions 1121 stored in the memory 1120 to determine that a PEI-O corresponds to a PO in a PF or determine that the PEI-O corresponds to POs in multiple PFs.

It may be noted that for specific implementation of each operation, reference can be made to the corresponding description of the above method embodiments. The terminal 1100 may be configured to perform the above method embodiments of the disclosure, which is not repeated.

Refer to FIG. 12, where FIG. 12 is a schematic structural diagram illustrating a terminal according to another embodiment of the disclosure. The terminal 1200 includes a processor 1210, a memory 1220, and a communication bus configured to connect the processor 1210 with the memory 1220.

The memory 1220 includes, but is not limited to, an RAM, an ROM, an EPROM, or a CD-ROM. The memory 1220 is configured to store program codes executed by the terminal 1200 and data transmitted by the terminal 1200.

The terminal 1200 further includes a communication interface, where the communication interface is configured to receive and send data.

The processor 1210 may be one or more CPUs. In the case that the processor 1210 is a CPU, the CPU may be implemented as a single-core CPU or multi-core CPU.

The processor 1210 of the terminal 1200 is configured to execute computer programs or instructions 1221 stored in the memory 1220 to determine a number of bits of a PEI PDCCH.

It may be noted that for specific implementation of each operation, reference can be made to the corresponding description of the above method embodiments. The terminal 1200 may be configured to perform the above method embodiments of the disclosure, which is not repeated.

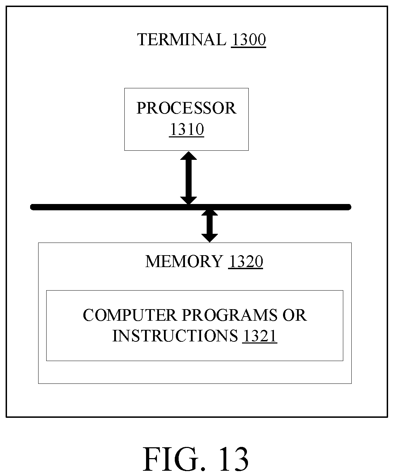

Refer to FIG. 13, where FIG. 13 is a schematic structural diagram illustrating a terminal according to another embodiment of the disclosure. The terminal 1300 includes a processor 1310, a memory 1320, and a communication bus configured to connect the processor 1310 with the memory 1320.

The memory 1320 includes, but is not limited to, an RAM, an ROM, an EPROM, or a CD-ROM. The memory 1320 is configured to store program codes executed by the terminal 1300 and data transmitted by the terminal 1300.

The terminal 1300 further includes a communication interface, where the communication interface is configured to receive and send data.

The processor 1310 may be one or more CPUs. In the case that the processor 1310 is a CPU, the CPU may be implemented as a single-core CPU or multi-core CPU.

The processor 1310 of the terminal 1300 is configured to execute computer programs or instructions 1321 stored in the memory 1320 to determine a bit location of a subgroup in a PO in a PEI PDCCH.

It may be noted that for specific implementation of each operation, reference can be made to the corresponding description of the above method embodiments. The terminal 1300 may be configured to perform the above method embodiments of the disclosure, which is not repeated.

A chip is further provided in embodiments of the disclosure. The chip includes a processor, a memory, and computer programs or instructions stored in the memory. The processor is configured to execute the computer programs or instructions to implement the operations described in the above method embodiments.

A chip module is further provided in embodiments of the disclosure. The chip module includes a transceiver component and a chip. The chip includes a processor, a memory, and computer programs or instructions stored in the memory. The processor is configured to execute the computer programs or instructions to implement the operations described in the above method embodiments.

A computer-readable storage medium is further provided in embodiments of the disclosure. The computer-readable storage medium is configured to store computer programs or instructions. The computer programs or instructions are executed to implement the operations described in the above method embodiments.

A computer program product is further provided in embodiments of the disclosure. The computer program product includes computer programs or instructions. The computer programs or instructions are executed to implement the operations described in the above method embodiments.

It may be noted that, for the sake of simplicity, various embodiments above are described as a series of action combinations. However, it will be appreciated by those skilled in the art that the disclosure is not limited by the sequence of actions described. Some operations in embodiments of the disclosure may be performed in other orders or simultaneously. In addition, it will be appreciated by those skilled in the art that the embodiments described in the specification are preferable embodiments, and the actions, the operations, the modules, and the units involved are not necessarily essential to the disclosure.

In the foregoing embodiments, the description of each embodiment has its own emphasis. For the parts not described in detail in one embodiment, reference may be made to related illustrations in other embodiments.

Those skilled in the art will appreciate that, all or part of the methods, the operations, or functions of relevant modules/units described in embodiments of the disclosure can be implemented through software, hardware, firmware, or any other combination thereof. When implemented by software, all or part of the functions can be implemented in the form of a computer program product or can be implemented by executing computer program instructions by the processor. The computer program product includes at least one computer program instruction. The computer program instructions may consist of corresponding software modules, where the software module may be stored in an RAM, a flash memory, an ROM, an EPROM, an electrically EPROM (EEPROM), a register, a hard disk, a mobile hard disk, a CD-ROM, or any other form of storage medium known in the art. The computer program instructions can be stored in a computer-readable storage medium, or transmitted from one computer-readable storage medium to another computer-readable storage medium. For example, the computer program instructions can be transmitted from one website, computer, server, or data center to another website, computer, server, or data center in a wired manner or in a wireless manner. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium, or a semiconductor medium (such as a solid state disk (SSD)), etc.

Each module/unit in the apparatus or product above described in the above embodiments may be a software module/unit, a hardware module/unit, or may be partially a software module/unit and partially a hardware module/unit. For example, For each apparatus and product applied to or integrated into the chip, each module/unit included can be implemented by hardware such as circuits, or part of modules/units included can be implemented by software programs that run on a processor integrated into the chip, and another part (if existing) of modules/units included can be implemented by hardware such as circuits. Similar, for each apparatus and product applied to or integrated into the chip module or each apparatus and product applied to or integrated into the terminal, reference can be made to the above.

The embodiments described above describe in further detail purposes, technical solutions and advantages of the embodiments of the disclosure. It should be understood that, the above is only specific embodiments of embodiments of the disclosure, and are not used to limit the protection scope of embodiments of the disclosure. Any modification, equivalent substitution, improvement, and the like that is made on the basis of technical solutions of embodiments of the disclosure shall be included in the protection scope of embodiments of the disclosure.

**Claims**

1. A method for a paging early indication (PEI), comprising:
   determining a location of a PEI occasion (PEI-O).

2. The method of claim 1, wherein determining the location of the PEI-O comprises:
   determining a location of a frame of the PEI-O (PEI-F) according to a frame offset.

3. The method of claim 2, wherein determining the location of the PEI-F according to the frame offset comprises:
   determining the location of the PEI-F according to the frame offset and a terminal identity ($UE\_ID$).

4. The method of claim 2 or 3, wherein a frame number $SFN\_pei$ of the PEI-F, is determined by at least one of: a frame offset $PEI\_offset$, a discontinuous reception (DRX) cycle $T$, a number $N$ of paging frames (PFs) in $T$, a frame number $SFN$ of a PF of a target paging occasion (PO), a number $N\_pei$ of PEIs in $T$, an index $i\_pei$ of a PEI of the target PO in $T$, a number $Ns$ of POs per PF, a number $M$ of POs corresponding to a PEI, or an index $i\_f$ of the PF of the target PO in the PEI.

5. The method of claim 4, wherein $SFN\_pei$ satisfies:

$$(SFN\_pei + PEI\_offset) \bmod T = (T/N) * (UE\_ID \bmod N);$$

wherein mod represents a modulo operation.

6. The method of claim 2 or 3, wherein a frame number $SFN\_pei$ of the PEI-F, is determined by a frame number $SFN$ of a PF of a target PO, and a frame offset $PEI\_offset$.

7. The method of claim 6, wherein $SFN\_pei$ satisfies:

$$SFN\_pei = SFN - PEI\_offset.$$

8. The method of any one of claims 4 to 7, wherein $SFN\_pei$ satisfies a first condition of a number of POs corresponding to a PEI or a first condition of a number of PEIs.

9. The method of claim 2 or 3, wherein a frame number $SFN\_pei$ of the PEI-F is determined by at least one of: a frame offset $PEI\_offset$, a DRX cycle $T$, a number $N\_pei$ of PEIs in $T$, or an index $i\_pei$ of a PEI of a target PO in $T$.

10. The method of claim 9, wherein $SFN\_pei$ satisfies:

$$(SFN\_pei + PEI\_offset) \bmod T = (T/N\_pei) * i\_pei.$$

11. The method of claim 9 or 10, wherein $i\_pei$ satisfies:

$$i\_pei=\text{floor}((UE\_ID \bmod N)/(N/N\_pei)); \text{ or}$$

$$i\_pei=\text{floor}(UE\_ID/(N/N\_pei)) \bmod N\_pei; \text{ or}$$

$$i\_pei=\text{floor}(\max(UE\_ID/N, UE\_ID*Ns/M)) \bmod N\_pei.$$

**12.** The method of any one of claims 9 to 11, wherein $N\_pei$ satisfies:

$$N\_pei=\max(1, (Ns/M)*N).$$

**13.** The method of claim 2 or 3, wherein a frame number $SFN\_pei$ of the PEI-F is determined by a frame number $SFN$ of a PF of a target PO, an index $i\_f$ of the PF of the target PO in a PEI, and a frame offset $PEI\_offset(i\_f)$ related to $i\_f$.

**14.** The method of claim 13, wherein $SFN\_pei$ satisfies:

$$SFN\_pei = SFN\text{-}PEI\_offset(i\_f).$$

**15.** The method of claim 2 or 3, wherein a frame number $SFN\_pei$ of the PEI-F, is determined by at least one of: an $UE\_ID$, a DXR cycle $T$, a number $N$ of PFs in $T$, an index $i\_f$ of a PF of a target PO in a PEI, or a frame offset $PEI\_offset(i\_f)$ related to $i\_f$.

**16.** The method of claim 15, wherein $SFN\_pei$ satisfies:

$$(SFN\_pei+PEI\_offset(i\_f)) \bmod T = (T/N)*UE\_ID \bmod N.$$

**17.** The method of any one of claims 9 to 16, wherein $SFN\_pei$ satisfies a second condition of a number of POs corresponding to a PEI or a second condition of a number of PEIs.

**18.** The method of any one of claims 13 to 17, wherein $PEI\_offset(i\_f)$ satisfies:

$$PEI\_offset(i\_f)=frame\_offset+i\_f*(T/N);$$

wherein $frame\_offset$ represents a frame offset independent of $i\_f$

**19.** The method of claim 1, wherein determining the location of the PEI-O, comprises:
determining a start location of the PEI-O according to a symbol offset, wherein the symbol offset is a symbol offset of the start location of the PEI-O relative to a start location of a PEI-F.

**20.** The method of claim 19, wherein the symbol offset is determined by a symbol offset index.

**21.** The method of claim 20, wherein the symbol offset index is equal to $foor(i\_s/M)$, wherein $i\_s$ represents an index of a target PO in a PF, and $M$ represents a number of POs corresponding to a PEI.

**22.** The method of claim 20, wherein the symbol offset index is 0.

**23.** The method of claim 1, wherein determining the location of the PEI-O, comprises:
determining a start location of the PEI-O according to a reference time and an offset.

**24.** The method of claim 23, wherein the reference time is a start location of a PO corresponding to a PEI.

**25.** The method of claim 24, wherein the PO corresponding to the PEI is a first PO in a first PF corresponding to the PEI.

26. The method of claim 25, wherein an index $i\_pf\_ref$ of the first PF corresponding to the PEI is determined by at least one of: an index $i\_pf$ of a PF of a target PO in a DRX cycle $T$, a number $Ns$ of POs per PF, or a number $M$ of POs corresponding to the PEI.

27. The method of claim 26, wherein $i\_pf\_ref$ satisfies:

$$i\_pf\_ref=i\_pf.$$

28. The method of claim 26, wherein $i\_pf\_ref$ satisfies:

$$i\_pf\_ref=\text{floor}(i\_pf/(M/Ns))*M/Ns.$$

29. The method of claim 25, wherein an index $i\_s\_ref$ of the first PO in the first PF corresponding to the PEI is determined by at least one of: an index $i\_s$ of a target PO in a PF, a number $M$ of POs corresponding to the PEI, or a number $Ns$ of POs per PF.

30. The method of claim 29, wherein $i\_s\_ref$ satisfies:

$$i\_s\_ref=\text{floor}(i\_s/M)*(Ns/M).$$

31. The method of claim 29, wherein $i\_s\_ref$ is 0.

32. A method for a paging early indication (PEI), comprising:
determining that a PEI occasion (PEI-O) corresponds to a paging occasion (PO) in a paging frame (PF), or determining that the PEI-O corresponds to POs in a plurality of PFs.

33. The method of claim 32, wherein determining that the PEI-O corresponds to the PO in the PF, comprises:
determining that the PEI-O corresponds to the PO in the PF, in the case that a first condition of a number of POs corresponding to a PEI or a first condition of a number of PEIs is satisfied.

34. The method of claim 33, wherein determining that the PEI-O corresponds to the POs in the plurality of PFs, comprises:
determining that the PEI-O corresponds to the POs in the plurality of PFs, in the case that a second condition of a number of POs corresponding to a PEI or a second condition of a number of PEIs is satisfied.

35. A method for a paging early indication (PEI), comprising:
determining a number of bits of a PEI physical downlink control channel (PDCCH).

36. The method of claim 35, wherein determining the number of the bits of the PEI PDCCH, comprises:
determining the number of the bits of the PEI PDCCH according to a number $Nsg$ of subgroups in a paging occasion (PO) and a number $M$ of POs corresponding to a PEI.

37. The method of claim 36, wherein determining the number of the bits of the PEI PDCCH according to the number $Nsg$ of the subgroups in the PO and the number $M$ of the POs corresponding to the PEI, comprises:

determining the number of the bits of the PEI PDCCH as $Nsg*M$; or
determining the number of the bits of the PEI PDCCH as $Nsg*M$, in the case that a first condition of a number of POs corresponding to a PEI or a first condition of a number of PEIs is satisfied.

38. The method of claim 35, wherein determining the number of the bits of the PEI PDCCH, comprises:
determining the number of the bits of the PEI PDCCH according to a number Y of bits of first indication information, a number $Nsg$ of subgroups in a PO, and a number $M$ of POs corresponding to a PEI.

39. The method of claim 38, wherein determining the number of the bits of the PEI PDCCH according to the number $Y$ of the bits of the first indication information, the number $Nsg$ of the subgroups in the PO, and the number $M$ of the POs corresponding to the PEI, comprises:

determining the number of the bits of the PEI PDCCH as *Y+Nsg\*M;* or
determining the number of the bits of the PEI PDCCH as *Y+Nsg\*M,* in the case that a first condition of a number of POs corresponding to a PEI or a first condition of a number of PEIs is satisfied.

40. The method of claim 35, wherein determining the number of the bits of the PEI PDCCH, comprises:
determining the number of the bits of the PEI PDCCH according to a number *Nsg* of subgroups in a PO, a number *Ns* of POs per PF, a number *N* of PFs in a discontinuous reception (DRX) cycle *T,* and a number *N_pei* of PEIs in *T.*

41. The method of claim 40, wherein determining the number of the bits of the PEI PDCCH according to the number *Nsg* of the subgroups in the PO, the number *Ns* of the POs per PF, the number *N* of the PFs in the DRX cycle *T,* and the number *N_pei* of the PEIs in *T,* comprises:

determining the number of the bits of the PEI PDCCH as *Nsg\*Ns\*(N/N_pei)*; or
determining the number of the bits of the PEI PDCCH as *Nsg\*Ns\*(N/N_pei),* in the case that a second condition of a number of POs corresponding to a PEI or a second condition of a number of PEIs is satisfied.

42. The method of claim 35, wherein determining the number of the bits of the PEI PDCCH, comprises:
determining the number of the bits of the PEI PDCCH according to a number Y of bits of first indication information, a number *Nsg* of subgroups in a PO, a number *Ns* of POs per PF, a number *N* of PFs in a DRX cycle *T,* and a number *N_pei* of PEIs in *T.*

43. The method of claim 42, wherein determining the number of the bits of the PEI PDCCH according to the number *Y* of the bits of the first indication information, the number *Nsg* of the subgroups in the PO, the number *Ns* of the POs per PF, the number *N* of the PFs in the DRX cycle *T,* and the number *N_pei* of the PEIs in *T,* comprises:

determining the number of the bits of the PEI PDCCH as *Y+Nsg\*Ns\*(N/N_pei)*; or
determining the number of the bits of the PEI PDCCH as *Y+Nsg\*Ns\*(N/N_pei),* in the case that a second condition of a number of POs corresponding to a PEI or a second condition of a number of PEIs is satisfied.

44. A method for a paging early indication (PEI), comprising:
determining a bit location of a subgroup in a paging occasion (PO) in a PEI physical downlink control channel (PDCCH).

45. The method of claim 44, wherein determining the bit location of the subgroup in the PO in the PEI PDCCH, comprises:
determining the bit location of the subgroup in the PO in the PEI PDCCH according to a number *Nsg* of subgroups in the PO, an index *i_s* of a target PO in a paging frame (PF), and an index *i_sg* of a subgroup in the target PO.

46. The method of claim 45, wherein determining the bit location of the subgroup in the PO in the PEI PDCCH according to the number *Nsg* of the subgroups in the PO, the index *i_s* of the target PO in the PF, and the index *i_sg* of the subgroup in the target PO, comprises:

determining the bit location of the subgroup in the PO in the PEI PDCCH as *Nsg\*i_s+i_sg*; or
determining the bit location of the subgroup in the PO in the PEI PDCCH as *Nsg\*i_s+i_sg*, in the case that a first condition of a number of POs corresponding to a PEI or a first condition of a number of PEIs is satisfied.

47. The method of claim 44, wherein determining the bit location of the subgroup in the PO in the PEI PDCCH, comprises:
determining the bit location of the subgroup in the PO in the PEI PDCCH according to a number *Y* of bits of first indication information, a number *Nsg* of subgroups in the PO, an index *i_s* of a target PO in a PF, and an index *i_sg* of a subgroup in the target PO.

48. The method of claim 47, wherein determining the bit location of the subgroup in the PO in the PEI PDCCH according to the number Y of the bits of the first indication information, the number *Nsg* of the subgroups in the PO, the index *i_s* of the target PO in the PF, and the index *i_sg* of the subgroup in the target PO, comprises:

determining the bit location of the subgroup in the PO in the PEI PDCCH as *Y+Nsg\*i_s+i_sg*; or
determining the bit location of the subgroup in the PO in the PEI PDCCH as *Y+Nsg\*i_s+i_sg*, in the case that a first condition of a number of POs corresponding to a PEI or a first condition of a number of PEIs is satisfied.

**49.** The method of claim 44, wherein determining the bit location of the subgroup in the PO in the PEI PDCCH, comprises: determining the bit location of the subgroup in the PO in the PEI PDCCH according to a number $Nsg$ of subgroups in the PO, an index $i\_s$ of a target PO in a PF, an index $i\_sg$ of a subgroup in the target PO, a number $Ns$ of POs per PF, and an index $i\_f$ of a PF of the target PO in a PEI.

**50.** The method of claim 49, wherein determining the bit location of the subgroup in the PO in the PEI PDCCH according to the number $Nsg$ of the subgroups in the PO, the index $i\_s$ of the target PO in the PF, the index $i\_sg$ of the subgroup in the target PO, the number $Ns$ of the POs per PF, and the index $i\_f$ of the PF of the target PO in the PEI, comprises:

determining the bit location of the UE subgroup in the PO in the PEI PDCCH as $Ns*Nsg*i\_f+Nsg*i\_s+i\_s$; or determining the bit location of the UE subgroup in the PO in the PEI PDCCH as $Ns*Nsg*i\_f+Nsg*i\_s+i\_s$, in the case that a second condition of a number of POs corresponding to a PEI or a second condition of a number of PEIs is satisfied.

**51.** The method of claim 44, wherein determining the bit location of the subgroup in the PO in the PEI PDCCH, comprises: determining the bit location of the subgroup in the PO in the PEI PDCCH according to a number $Y$ of bits of first indication information, a number $Nsg$ of subgroups in the PO, an index $i\_s$ of a target PO in a PF, an index $i\_sg$ of a subgroup in the target PO, a number $Ns$ of POs per PF, and an index $i\_f$ of a PF of the target PO in a PEI.

**52.** The method of claim 44, wherein determining the bit location of the subgroup in the PO in the PEI PDCCH according to the number Y of the bits of the first indication information, the number $Nsg$ of the subgroups in the PO, the index $i\_s$ of the target PO in the PF, the index $i\_sg$ of the subgroup in the target PO, the number $Ns$ of the POs per PF, and the index $i\_f$ of the PF of the target PO in the PEI, comprises:

determining the bit location of the UE subgroup in the PO in the PEI PDCCH as $Y+Ns*Nsg*i\_f+Nsg*i\_s+i\_sg$; or determining the bit location of the UE subgroup in the PO in the PEI PDCCH as $Y+Ns*Nsg*i\_f+Nsg*i\_s+i\_sg$, in the case that a second condition of a number of POs corresponding to a PEI or a second condition of a number of PEIs is satisfied.

**53.** The method of any one of claims 49 to 52, wherein $i\_f$ satisfies:

$$i\_f = UE\_ID \bmod (N/N\_pei).$$

**54.** The method of any one of claims 45 to 52, wherein $i\_sg$ satisfies:

$$i\_sg = \mathrm{floor}(UE\_ID/N*Ns) \bmod Nsg.$$

**55.** The method of any one of claims 45 to 52, wherein $i\_s$ satisfies:

$$i\_s = \mathrm{floor}(UE\_ID/N) \bmod Ns.$$

**56.** An apparatus for a paging early indication (PEI), comprising: a determining unit configured to determine a location of a PEI occasion (PEI-O).

**57.** The apparatus of claim 56, wherein the determining unit configured to determine the location of the PEI-O is configured to: determine a location of a frame of the PEI-O (PEI-F) according to a frame offset.

**58.** The apparatus of claim 57, wherein the determining unit configured to determine the location of the PEI-F according to the frame offset is configured to: determine the location of the PEI-F according to the frame offset and a terminal identity ($UE\_ID$).

**59.** The apparatus of claim 57 or 58, wherein a frame number $SFN\_pei$ of the PEI-F is determined by at least one of: a frame offset $PEI\_offset$, a discontinuous reception (DRX) cycle $T$, a number $N$ of paging frames (PFs) in $T$, a frame number $SFN$ of a PF of a target paging occasion (PO), a number $N\_pei$ of PEIs in $T$, an index $i\_pei$ of a PEI of the target PO in *T,* a number *Ns* of POs per PF, a number *M* of POs corresponding to a PEI, or an index *i_f* of the PF of the target PO in the PEI.

**60.** The apparatus of claim 59, wherein *SFN_pei* satisfies:

$$(SFN\_pei + PEI\_offset) \bmod T = (T/N)*(UE\_ID \bmod N);$$

wherein mod represents a modulo operation.

**61.** The apparatus of claim 57 or 58, wherein a frame number *SFN_pei* of the PEI-F is determined by a frame number *SFN* of a PF of a target PO, and a frame offset *PEI_offset.*

**62.** The apparatus of claim 61, wherein *SFN_pei* satisfies:

$$SFN\_pei = SFN - PEI\_offset.$$

**63.** The apparatus of any one of claims 59 to 62, wherein *SFN_pei* satisfies a first condition of a number of POs corresponding to a PEI or a first condition of a number of PEIs.

**64.** The apparatus of claim 57 or 58, wherein a frame number *SFN_pei* of the PEI-F is determined by at least one of: a frame offset *PEI_offset*, a DRX cycle *T,* a number *N_pei* of PEIs in *T,* or an index *i_pei* of a PEI of a target PO in *T.*

**65.** The apparatus of claim 64, wherein *SFN_pei* satisfies:

$$(SFN\_pei + PEI\_offset) \bmod T = (T/N\_pei)*i\_pei.$$

**66.** The apparatus of claim 64 or 65, wherein *i_pei* satisfies:

$$i\_pei = \mathrm{floor}((UE\_ID \bmod N)/(N/N\_pei));$$

or

$$i\_pei = \mathrm{floor}(UE\_ID/(N/N\_pei)) \bmod N\_pei;$$

or

$$i\_pei = \mathrm{floor}(\max(UE\_ID/N, UE\_ID*Ns/M)) \bmod N\_pei.$$

**67.** The apparatus of any one of claims 64 to 66, wherein *N_pei* satisfies:

$$N\_pei = \max(1, (Ns/M)*N).$$

**68.** The apparatus of claim 57 or 58, wherein a frame number *SFN_pei* of the PEI-F is determined by a frame number *SFN* of a PF of a target PO, an index *i_f* of the PF of the target PO in a PEI, and a frame offset *PEI_offset(i_f)* related to *i_f.*

**69.** The apparatus of claim 68, wherein *SFN_pei* satisfies:

$$SFN\_pei = SFN - PEI\_offset(i\_f).$$

**70.** The apparatus of claim 57 or 58, wherein a frame number $SFN\_pei$ of the PEI-F is determined by at least one of: $UE\_ID$, a DXR cycle $T$, a number $N$ of PFs in $T$, an index ij' of a PF of a target PO in a PEI, or a frame offset $PEI\_offset(i\_f)$ related to $i\_f$.

**71.** The apparatus of claim 70, wherein $SFN\_pei$ satisfies:

$$(SFN\_pei+PEI\_offset(i\_f)) \bmod T = (T/N)*UE\_ID \bmod N.$$

**72.** The apparatus of any one of claims 64 to 71, wherein $SFN\_pei$ satisfies a second condition of a number of POs corresponding to a PEI or a second condition of a number of PEIs.

**73.** The apparatus of any one of claims 68 to 72, wherein $PEI\_offset(i\_f)$ satisfies:

$$PEI\_offset(i\_f)=frame\_offset+i\_f*(T/N);$$

wherein $frame\_offset$ represents a frame offset independent of $i\_f$.

**74.** The apparatus of claim 56, wherein the determining unit configured to determine the location of the PEI-O is configured to:
determine a start location of the PEI-O according to a symbol offset, wherein the symbol offset is a symbol offset of the start location of the PEI-O relative to a start location of a PEI-F.

**75.** The apparatus of claim 74, wherein the symbol offset is determined by a symbol offset index.

**76.** The apparatus of claim 75, wherein the symbol offset index is equal to foor($i\_s/M$), wherein
$i\_s$ represents an index of a target PO in a PF, and $M$ represents a number of POs corresponding to a PEI.

**77.** The apparatus of claim 75, wherein the symbol offset index is 0.

**78.** The apparatus of claim 1, wherein the determining unit configured to determine the location of the PEI-O is configured to:
determine a start location of the PEI-O according to a reference time and an offset.

**79.** The apparatus of claim 78, wherein the reference time is a start location of a PO corresponding to a PEI.

**80.** The apparatus of claim 79, wherein the PO corresponding to the PEI is a first PO in a first PF corresponding to the PEI.

**81.** The apparatus of claim 80, wherein an index $i\_pf\_ref$ of the first PF corresponding to the PEI is determined by at least one of: an index $i\_pf$ of a PF of a target PO in a DRX cycle $T$, a number $Ns$ of POs per PF, or a number $M$ of POs corresponding to the PEI.

**82.** The apparatus of claim 81, wherein $i\_pf\_ref$ satisfies:

$$i\_pf\_ref=i\_pf.$$

**83.** The apparatus of claim 81, wherein $i\_pf\_ref$ satisfies:

$$i\_pf\_ref=floor(i\_pf/(M/Ns))*M/Ns.$$

**84.** The apparatus of claim 80, wherein an index $i\_s\_ref$ of the first PO in the first PF corresponding to the PEI is determined by at least one of: an index $i\_s$ of a target PO in a PF, a number $M$ of POs corresponding to the PEI, or a number $Ns$ of POs per PF.

**85.** The apparatus of claim 84, wherein $i\_s\_ref$ satisfies:

$$i\_s\_ref = \text{floor}(i\_s/M) * (Ns/M).$$

**86.** The apparatus of claim 84, wherein $i\_s\_ref$ is 0.

**87.** An apparatus for a paging early indication (PEI), comprising:
a determining unit configured to determine that a PEI occasion (PEI-O) corresponds to a paging occasion (PO) in a paging frame (PF) or determine that the PEI-O corresponds to POs in a plurality of PFs.

**88.** The apparatus of claim 87, wherein the determining unit configured to determine that the PEI-O corresponds to the PO in the PF is configured to:
determine that the PEI-O corresponds to the PO in the PF, in the case that a first condition of a number of POs corresponding to a PEI or a first condition of a number of PEIs is satisfied.

**89.** The apparatus of claim 88, wherein the determining unit configured to determine that the PEI-O corresponds to the POs in the plurality of PFs is configured to:
determine that the PEI-O corresponds to the POs in the plurality of PFs, in the case that a second condition of a number of POs corresponding to a PEI or a second condition of a number of PEIs is satisfied.

**90.** An apparatus for a paging early indication (PEI), comprising:
a determining unit configured to determine a number of bits of a PEI physical downlink control channel (PDCCH).

**91.** The apparatus of claim 90, wherein the determining unit configured to determine the number of the bits of the PEI PDCCH is configured to:
determine the number of the bits of the PEI PDCCH according to a number $Nsg$ of subgroups in a paging occasion (PO) and a number $M$ of POs corresponding to a PEI.

**92.** The apparatus of claim 91, wherein the determining unit configured to determine the number of the bits of the PEI PDCCH according to the number $Nsg$ of the subgroups in the PO and the number $M$ of the POs corresponding to the PEI is configured to:

determine the number of the bits of the PEI PDCCH as $Nsg*M$; or
determine the number of the bits of the PEI PDCCH as $Nsg*M$, in the case that a first condition of a number of POs corresponding to a PEI or a first condition of a number of PEIs is satisfied.

**93.** The apparatus of claim 90, wherein the determining unit configured to determine the number of the bits of the PEI PDCCH is configured to:
determine the number of the bits of the PEI PDCCH according to a number Y of bits of first indication information, a number $Nsg$ of subgroups in a PO, and a number $M$ of POs corresponding to a PEI.

**94.** The apparatus of claim 93, wherein the determining unit configured to determine the number of the bits of the PEI PDCCH according to the number Y of the bits of the first indication information, the number $Nsg$ of the subgroups in the PO, and the number $M$ of the POs corresponding to the PEI is configured to:

determine the number of the bits of the PEI PDCCH as $Y+Nsg*M$; or
determine the number of the bits of the PEI PDCCH as $Y+Nsg*M$, in the case that a first condition of a number of POs corresponding to a PEI or a first condition of a number of PEIs is satisfied.

**95.** The apparatus of claim 90, wherein the determining unit configured to determine the number of the bits of the PEI PDCCH is configured to:
determine the number of the bits of the PEI PDCCH according to a number $Nsg$ of subgroups in a PO, a number $Ns$ of POs per PF, a number $N$ of PFs in a discontinuous reception (DRX) cycle $T$, and a number $N\_pei$ of PEIs in $T$.

**96.** The apparatus of claim 95, wherein the determining unit configured to determine the number of the bits of the PEI PDCCH according to the number $Nsg$ of the subgroups in the PO, the number $Ns$ of the POs per PF, the number $N$ of the PFs in the DRX cycle $T$, and the number $N\_pei$ of the PEIs in $T$ is configured to:

determine the number of the bits of the PEI PDCCH as $Nsg*Ns*(N/N\_pei)$; or

determine the number of the bits of the PEI PDCCH as $Nsg*Ns*(N/N\_pei)$, in the case that a second condition of a number of POs corresponding to a PEI or a second condition of a number of PEIs is satisfied.

97. The apparatus of claim 90, wherein the determining unit configured to determine the number of the bits of the PEI PDCCH is configured to:
determine the number of the bits of the PEI PDCCH according to a number Y of bits of first indication information, a number $Nsg$ of subgroups in a PO, a number $Ns$ of POs per PF, a number $N$ of PFs in a DRX cycle $T$, and a number $N\_pei$ of PEIs in $T$.

98. The apparatus of claim 97, wherein the determining unit configured to determine the number of the bits of the PEI PDCCH according to the number Y of the bits of the first indication information, the number $Nsg$ of the subgroups in the PO, the number $Ns$ of the POs per PF, the number $N$ of the PFs in the DRX cycle $T$, and the number $N\_pei$ of the PEIs in $T$ is configured to:

   determine the number of the bits of the PEI PDCCH as $Y+Nsg*Ns*(N/N\_pei)$; or
   determine the number of the bits of the PEI PDCCH as $Y+Nsg*Ns*(N/N\_pei)$, in the case that a second condition of a number of POs corresponding to a PEI or a second condition of a number of PEIs is satisfied.

99. An apparatus for a paging early indication (PEI), comprising:
a determining unit configured to determine a bit location of a subgroup in a paging occasion (PO) in a PEI physical downlink control channel (PDCCH).

100. The apparatus of claim 99, wherein the determining unit configured to determine the bit location of the subgroup in the PO in the PEI PDCCH is configured to:
determine the bit location of the subgroup in the PO in the PEI PDCCH according to a number $Nsg$ of subgroups in the PO, an index $i\_s$ of a target PO in a paging frame (PF), and an index $i\_sg$ of a subgroup in the target PO.

101. The apparatus of claim 100, wherein the determining unit configured to determine the bit location of the subgroup in the PO in the PEI PDCCH according to the number $Nsg$ of the subgroups in the PO, the index $i\_s$ of the target PO in the PF, and the index $i\_sg$ of the subgroup in the target PO is configured to:

   determine the bit location of the subgroup in the PO in the PEI PDCCH as $Nsg*i\_s+i\_sg$; or
   determine the bit location of the subgroup in the PO in the PEI PDCCH as $Nsg*i\_s+i\_sg$, in the case that a first condition of a number of POs corresponding to a PEI or a first condition of a number of PEIs is satisfied.

102. The apparatus of claim 99, wherein the determining unit configured to determine the bit location of the subgroup in the PO in the PEI PDCCH is configured to:
determine the bit location of the subgroup in the PO in the PEI PDCCH according to a number $Y$ of bits of first indication information, a number $Nsg$ of subgroups in the PO, an index $i\_s$ of a target PO in a PF, and an index $i\_sg$ of a subgroup in the target PO.

103. The apparatus of claim 102, wherein the determining unit configured to determine the bit location of the subgroup in the PO in the PEI PDCCH according to the number Y of the bits of the first indication information, the number $Nsg$ of the subgroups in the PO, the index $i\_s$ of the target PO in the PF, and the index $i\_sg$ of the subgroup in the target PO is configured to:

   determine the bit location of the subgroup in the PO in the PEI PDCCH as $Y+Nsg*i\_s+i\_sg$; or
   determine the bit location of the subgroup in the PO in the PEI PDCCH as $Y+Nsg*i\_s+i\_sg$, in the case that a first condition of a number of POs corresponding to a PEI or a first condition of a number of PEIs is satisfied.

104. The apparatus of claim 99, wherein the determining unit configured to determine the bit location of the subgroup in the PO in the PEI PDCCH is configured to:
determine the bit location of the subgroup in the PO in the PEI PDCCH according to a number $Nsg$ of subgroups in the PO, an index $i\_s$ of a target PO in a PF, an index $i\_sg$ of a subgroup in the target PO, a number $Ns$ of POs per PF, and an index $i\_f$ of a PF of the target PO in a PEI.

105. The apparatus of claim 104, wherein the determining unit configured to determine the bit location of the subgroup in the PO in the PEI PDCCH according to the number $Nsg$ of the subgroups in the PO, the index $i\_s$ of the target PO in the PF, the index $i\_sg$ of the subgroup in the target PO, the number $Ns$ of the POs per PF, and the index $i\_f$ of the PF of the target PO in the PEI is configured to:

determine the bit location of the UE subgroup in the PO in the PEI PDCCH as $Ns*Nsg*i\_f+Nsg*i\_s+i\_s$; or
determine the bit location of the UE subgroup in the PO in the PEI PDCCH as $Ns*Nsg*i\_f+Nsg*i\_s+i\_s$, in the case that a second condition of a number of POs corresponding to a PEI or a second condition of a number of PEIs is satisfied.

106. The apparatus of claim 99, wherein the determining unit configured to determine the bit location of the subgroup in the PO in the PEI PDCCH is configured to:
determine the bit location of the subgroup in the PO in the PEI PDCCH according to a number $Y$ of bits of first indication information, a number $Nsg$ of subgroups in the PO, an index $i\_s$ of a target PO in a PF, an index $i\_sg$ of a subgroup in the target PO, a number $Ns$ of POs per PF, and an index $i\_f$ of a PF of the target PO in a PEI.

107. The apparatus of claim 99, wherein the determining unit configured to determine the bit location of the subgroup in the PO in the PEI PDCCH according to the number Y of the bits of the first indication information, the number $Nsg$ of the subgroups in the PO, the index $i\_s$ of the target PO in the PF, the index $i\_sg$ of the subgroup in the target PO, the number $Ns$ of the POs per PF, and the index $i\_f$ of the PF of the target PO in the PEI is configured to:

determine the bit location of the UE subgroup in the PO in the PEI PDCCH as $Y+Ns*Nsg*i\_f+Nsg*i\_s+i\_sg$; or
determine the bit location of the UE subgroup in the PO in the PEI PDCCH as $Y+Ns*Nsg*i\_f+Nsg*i\_s+i\_sg$, in the case that a second condition of a number of POs corresponding to a PEI or a second condition of a number of PEIs is satisfied.

108. The apparatus of any one of claims 104 to 107, wherein $i\_f$ satisfies:

$$i\_f = UE\_ID \bmod (N/N\_pei).$$

109. The apparatus of any one of claims 100 to 107, wherein $i\_sg$ satisfies:

$$i\_sg = \mathrm{floor}(UE\_ID/N*Ns) \bmod Nsg.$$

110. The apparatus of any one of claims 100 to 107, wherein $i\_s$ satisfies:

$$i\_s = \mathrm{floor}(UE\_ID/N) \bmod Ns.$$

111. A terminal, comprising a processor, a memory, and computer programs or instructions stored in the memory, wherein the processor is configured to execute the computer programs or instructions to implement the operations in the method of any one of claims 1 to 31, claims 32 to 34, claims 35 to 43, and claims 44 to 55.

112. A computer-readable storage medium configured to store computer programs or instructions, wherein the computer programs or instructions are executed to implement the operations in the method of any one of claims 1 to 31, claims 32 to 34, claims 35 to 43, and claims 44 to 55.

113. A chip comprising a processor, wherein the processor is configured to perform the operations in the method of any one of claims 1 to 31, claims 32 to 34, claims 35 to 43, and claims 44 to 55.

FIG. 1

DETERMINE A LOCATION OF A PEI-O ⟋ S210

FIG. 2

DETERMINE THAT A PEI-O CORRESPONDS TO A PO IN A PF, OR DETERMINE THAT THE PEI-O CORRESPONDS TO POS IN MULTIPLE PFS ⟋ S310

FIG. 3

DETERMINE THE NUMBER OF BITS OF A PEI PDCCH — S410

FIG. 4

DETERMINE A BIT LOCATION OF A SUBGROUP IN A PO IN A PEI PDCCH — S510

FIG. 5

600

APPARATUS FOR A PEI

DETERMINING UNIT — 601

FIG. 6

700

APPARATUS FOR A PEI

DETERMINING UNIT

701

FIG. 7

800

APPARATUS FOR A PEI

DETERMINING UNIT

801

FIG. 8

900

APPARATUS FOR A
PEI

901

DETERMINING
UNIT

FIG. 9

TERMINAL 1000

PROCESSOR
1010

MEMORY 1020

COMPUTER PROGRAMS OR
INSTRUCTIONS 1021

FIG. 10

TERMINAL 1100

PROCESSOR
1110

MEMORY 1120

COMPUTER PROGRAMS OR
INSTRUCTIONS 1121

FIG. 11

TERMINAL 1200

PROCESSOR
1210

MEMORY 1220

COMPUTER PROGRAMS OR
INSTRUCTIONS 1221

FIG. 12

TERMINAL <u>1300</u>

PROCESSOR
<u>1310</u>

MEMORY <u>1320</u>

COMPUTER PROGRAMS OR
INSTRUCTIONS <u>1321</u>

# FIG. 13

## INTERNATIONAL SEARCH REPORT

| International application No. |
|---|
| **PCT/CN2022/129964** |

| A. | CLASSIFICATION OF SUBJECT MATTER |
|---|---|
| | H04L 5/00(2006.01)i |

According to International Patent Classification (IPC) or to both national classification and IPC

| B. | FIELDS SEARCHED |
|---|---|

Minimum documentation searched (classification system followed by classification symbols)

H04L; HO4W

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 寻呼提前指示, 寻呼早期指示, 寻呼, 时机, 位置, 偏移, 帧号, 符号, 寻呼帧, 一个, 多个, 分组, 子组, 比特, 下行控制信道, Paging Early Indication, PEI, paging, occasion, location, offset, SFN, signal, paging frame, PF, one, two, multiple, subgroup, bit, DCI

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | MEDIATEK INC. "Open Issues for PEI and UE Paging Subgrouping" *3GPP TSG-RAN WG2 Meeting #116bis electronic R2-2200315,* 25 January 2022 (2022-01-25), section 2 | 1-113 |
| PX | WO 2022116090 A1 (GUANGDONG OPPO MOBILE TELECOMMUNICATIONS CORP., LTD.) 09 June 2022 (2022-06-09) description, page 5 line 49-page 10 line 38, and page 12 lines 24-48 | 1-113 |
| X | NOKIA et al. "On paging enhancements for UE power saving" *3GPP TSG RAN WG1 #106bis-e R1-2110311,* 19 October 2021 (2021-10-19), sections 1-3 | 1-113 |
| X | WO 2021180206 A1 (MEDIATEK INC.) 16 September 2021 (2021-09-16) description, paragraphs [0026]-[0045] | 1-113 |
| A | CN 109561500 A (JRD COMMUNICATION INC.) 02 April 2019 (2019-04-02) entire document | 1-113 |
| A | CN 106211329 A (ZTE CORP.) 07 December 2016 (2016-12-07) entire document | 1-113 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 January 2023** | **28 January 2023** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/129964**

| Patent document cited in search report | | | Publication date (day/month/year) | Patent family member(s) | | | Publication date (day/month/year) |
|---|---|---|---|---|---|---|---|
| WO | 2022116090 | A1 | 09 June 2022 | None | | | |
| WO | 2021180206 | A1 | 16 September 2021 | CN | 115280861 | A | 01 November 2022 |
| | | | | EP | 4108017 | A1 | 28 December 2022 |
| CN | 109561500 | A | 02 April 2019 | WO | 2019061837 | A1 | 04 April 2019 |
| | | | | CN | 113596991 | A | 02 November 2021 |
| CN | 106211329 | A | 07 December 2016 | US | 2017367070 | A1 | 21 December 2017 |
| | | | | JP | 2018506207 | A | 01 March 2018 |
| | | | | EP | 3240347 | A1 | 01 November 2017 |
| | | | | WO | 2016101747 | A1 | 30 June 2016 |

Form PCT/ISA/210 (patent family annex) (January 2015)